(19) Europäisches Patentamt
European Patent Office
Office européen des brevets

(11) **EP 4 071 502 B1**

(12) **EUROPEAN PATENT SPECIFICATION**

(45) Date of publication and mention
of the grant of the patent:
**11.02.2026 Bulletin 2026/07**

(21) Application number: **20908243.7**

(22) Date of filing: **09.12.2020**

(51) International Patent Classification (IPC):
*G01S 17/931* (2020.01)    *G01S 17/87* (2020.01)
*G01S 7/48* (2006.01)    *G01S 7/484* (2006.01)
*G01S 7/4863* (2020.01)    *G01S 7/487* (2006.01)

(52) Cooperative Patent Classification (CPC):
**G01S 7/4863; G01S 7/4876; G01S 17/931**

(86) International application number:
**PCT/CN2020/134717**

(87) International publication number:
**WO 2021/129388 (01.07.2021 Gazette 2021/26)**

(54) **SIGNAL PROCESSING METHOD AND RELATED DEVICE**

SIGNALVERARBEITUNGSVERFAHREN UND ZUGEHÖRIGE VORRICHTUNG

PROCÉDÉ DE TRAITEMENT DE SIGNAL ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2019 CN 201911403974**

(43) Date of publication of application:
**12.10.2022 Bulletin 2022/41**

(73) Proprietor: **Shenzhen Yinwang Intelligent
Technologies Co., Ltd.
Shenzhen, Guangdong 518129 (CN)**

(72) Inventor: **WU, Xiaoke
Shenzhen, Guangdong 518129 (CN)**

(74) Representative: **Maiwald GmbH
Elisenhof
Elisenstraße 3
80335 München (DE)**

(56) References cited:
EP-A1- 3 182 159       CN-A- 108 152 830
CN-A- 108 152 830     CN-A- 109 313 256
CN-A- 109 425 869     CN-A- 110 187 360
CN-A- 110 596 721     CN-A- 110 596 723
CN-A- 110 609 293     CN-A- 110 609 293
US-A1- 2001 025 211

**Description**

**TECHNICAL FIELD**

This application relates to the field of signal processing technologies, and in particular, to a signal processing method, a related apparatus, a laser radar, and a terminal.

**BACKGROUND**

A laser radar is a ranging apparatus implemented through a combination of a laser technology and a photoelectric conversion technology. A basic working principle of the laser radar is as follows: A transmit end of the laser radar transmits laser light to a detection area; and a receive end of the laser radar receives an optical signal returned from the detection area, and determines information in the detection area by measuring a round trip time of the optical signal. A radar imaging technology is a technology for obtaining an image of a detection scene by expanding a field of view of a laser radar to two-dimensional space through scanning or in a multi-element detection array form. A scanning-type laser radar is widely applied to self-driving, unmanned aerial vehicles, resource exploration, or other fields due to its advantages such as a high information resolution, a small volume, and a light weight. In the scanning-type laser radar, a transmission technology in which a transmitting path and a receiving path are not coaxial is generally used. To be specific, a scanning-type reflection module with a variable angle is added at a transmit end to expand a field of view, and an array detector is used at a receive end to receive an optical signal returned from the field of view and convert the optical signal into an electrical signal. However, because the receive end needs to cover an entire field of view corresponding to a scanning angle of the transmit end, a receiving field of view is large, and obtained echo information is quite easily affected by an irrelevant signal (for example, solar light, other laser light, or current white noise). This affects accuracy of the generated echo information.

Therefore, how to reduce interference of an irrelevant signal in radar echo information and increase a signal-to-noise ratio of a received signal is a technical problem being studied by persons skilled in the art.

Document CN 108 152 830 A provides a laser radar scanning and imaging system and a measurement method thereof. The system includes a transmitting module, a receiving module, a data collecting module, a master control module and a data transmission module; the transmitting module comprises a laser device and a reflecting mirror, the receiving module includes an optical receiving lens and a focal planar array detector, and the angle of the reflecting mirror can be adjusted in two orthogonal dimensions. The method has the advantages of a scanning-type laser radar and a floodlighting-type laser radar; under a paraxial system, the transmitting optics has no need to achieve a function of receiving reflected light, and therefore a small and lightweight galvanometer can be adopted for scanning; since detector units arrayed on a focal plane are adopted for partitioning a view field, the corresponding view field angle of each detector unit is small, and accordingly the interference of background light is effectively reduced; by adopting the method, an imaging radar system which is lightweight, high in frame rate and wide in distance range can be achieved.

Document CN 110 609 293 A discloses a time-of-flight-based distance detection system comprising a laser transmitting module and a laser receiving module, wherein the laser receiving module comprises a detector and a control unit; the laser transmitting module transmits a laser pulse sequence to a target, and the detector receives the photons reflected by the target and outputs a response signal; the control unit comprises a time-to-digital converter and a controller; the controller is used to control the time-to-digital converter to measure a first TOF value and a second TOF value, wherein the first TOF value is used to match the pre-defined corresponding relationship to regulate the working state of SPAD in the selected area of the detector array, and the second TOF value is used to calculate the distance between the target and the system. The method includes a two-step test on a target object to obtain an accurate TOF value of the target object, which can overcome inaccurate measurement caused by parallax, and avoid power consumption and noise caused by excessive SPAD work.

Document US 2001/0025211 A1 discloses that a transmission wave is applied to a predetermined angular range in a width-wise direction of a vehicle. Object-unit data pieces containing at least data pieces representing distances to objects in correspondence with vehicle-width-wise direction angles are generated on the basis of a reflected wave. A determination is made as to whether each object is moving or stationary on the basis of a speed of the vehicle and a relative speed of the object. From the object-unit data pieces, ones are extracted which are effective for road shape recognition on the basis of a result of determining whether each object is moving or stationary. Ones of the extracted object-unit data pieces which represent monotonically increasing distances as viewed along one of clockwise and counterclockwise angle directions are grouped to generate data representing a road-side-object group. A road edge is recognized on the basis of the data representing the road-side-object group.

**SUMMARY**

Embodiments of this application disclose a signal processing method, a related apparatus, a laser radar, and a terminal, to reduce interference of an irrelevant signal and increase a signal-to-noise ratio of a received signal. The present invention is defined by the attached set of claims. Embodiments and aspects which are not covered by the invention should be considered as examples useful for understanding the invention.

According to a first aspect, an embodiment of this application discloses a signal processing method, including:

reflecting first laser light to a detection area at a first angle by using a scanning-type reflection module;
determining a first converged electrical signal based on at least two electrical signals from at least two detection units, where the first converged electrical signal includes at least one characteristic signal;
determining, based on time information of the at least one characteristic signal, at least one target distance corresponding to the detection area, where the at least one characteristic signal corresponds to the at least one target distance;
determining at least one detection unit group based on the at least one target distance and the first angle, where a detection unit included in each of the at least one detection unit group belongs to the at least two detection units; and
determining at least one piece of echo information in the detection area based on a first electrical signal obtained based on at least one electrical signal from a first detection unit group in the at least one detection unit group. In this embodiment of this application, a preliminary target distance is estimated based on a signal obtained through convergence of signals output by detection units, and a detection unit related to current detection is determined based on a scanning angle to select a signal output by the detection unit related to the current detection, to determine echo information in the detection area. In this way, interference of an irrelevant signal is reduced, effectiveness of a received signal is improved, and a signal-to-noise ratio of the received signal is increased.

In a possible implementation of the first aspect, each detection unit is one photoelectric conversion microcomponent or a set of photoelectric conversion microcomponents.

Because a signal value of one photoelectric conversion microcomponent is easily saturated, reflection intensity information in the detection area cannot be accurately represented by using an electrical signal from one photoelectric conversion microcomponent. In this embodiment of this application, when a first detection unit includes a plurality of photoelectric conversion microcomponents, signals output by the conversion microcomponents in the detection unit may be converged, and a converged signal is output, to avoid oversaturation of a finally output electrical signal. Therefore, echo information that is in the detection area and that is subsequently determined based on the electrical signal is more accurate, and it is easier to determine the reflection intensity information in the detection area.

In another possible implementation of the first aspect, the characteristic signal includes a peak signal, a front-edge signal, or a waveform centroid signal of the first converged electrical signal; and the time information is used to indicate a receiving moment of the characteristic signal.

It can be learned that, the characteristic signal in the first converged electrical signal can reflect that a relatively strong optical signal appears. In a laser radar detection process, a relatively strong optical signal is usually transmitted by a laser radar. Therefore, when the characteristic signal appears, it is highly probable that a laser radar signal is received. Therefore, echo information in laser radar detection can be obtained more accurately based on the characteristic signal. In another possible implementation of the first aspect, the at least one characteristic signal includes a first characteristic signal, the first characteristic signal is used to determine a first target distance, and the first target distance is used to determine the first detection unit group; and the determining echo information in the detection area based on a first electrical signal obtained based on at least one electrical signal from a first detection unit group in the at least one detection unit group includes:

determining a first time period based on time information of the first characteristic signal, where a receiving moment of the first characteristic signal is within the first time period;
obtaining an electrical sub-signal that is in the first time period and that is of one electrical signal from the first detection unit group, to obtain the first electrical signal, where the first detection unit group is one of the at least one detection unit group; and
determining the at least one piece of echo information in the detection area based on the first electrical signal.

It can be learned that, because the first characteristic signal can quite probably reflect that a laser signal is received, the first time period is a time period in which the laser signal is quite probably received. In addition, because the first detection unit group is a truly relevant detection unit group obtained by screening, the first electrical signal obtained based on the sub-signal that is in the first time period and that is of the signal output by the first detection unit group can more accurately reflect a receiving status of the laser signal. Therefore, the echo information obtained based on the first electrical signal is more accurate. In addition, the electrical sub-signal is used as a basic processing unit. This facilitates decoupling processing of characteristic signals in the entire electrical signal that are generated in different time periods.

In another possible implementation of the first aspect, the at least one characteristic signal includes a first characteristic signal, the first characteristic signal is used to determine a first target distance, and the first target distance is used to determine the first detection unit group; and the determining echo information in the detection area based on a first electrical signal obtained based on at least one electrical signal from a first detection unit group in the at least one detection unit group includes:

> determining a first time period based on time information of the first characteristic signal, where a receiving moment of the first characteristic signal is within the first time period; and
> obtaining signals that are in the first time period and that are in a plurality of electrical signals from the first detection unit group to obtain a plurality of electrical sub-signals, where the first detection unit group is one of the at least one detection unit group, and the first electrical signal obtained by converging the plurality of electrical sub-signals is used to determine the at least one piece of echo information in the detection area.

It can be learned that, because the first characteristic signal can quite probably reflect that a laser signal is received, the first time period is a time period in which the laser signal is quite probably received. In addition, because the first detection unit group is a truly relevant detection unit group obtained by screening, the electrical signals that are in the first time period and that are in the signals output by the first detection unit group can more accurately reflect a receiving status of the laser signal. Therefore, the plurality of electrical sub-signals (or may be referred to as local signals) of the electrical signals from the plurality of detection unit groups are obtained, and the plurality of electrical sub-signals are converged to obtain the first electrical signal, so that the echo information obtained based on the first electrical signal is more accurate. The first electrical signal may be obtained by converging the plurality of electrical sub-signals by using a summation method or a cross-correlation method. In addition, the electrical sub-signal is used as a basic processing unit. This facilitates decoupling processing of characteristic signals in the entire electrical signal that are generated in different time periods.

In another possible implementation of the first aspect, the determining at least one detection unit group based on the at least one target distance and the first angle includes:
determining, based on a first correspondence set, a detection unit group corresponding to the at least one target distance and the first angle, where there is a predefined correspondence between the at least one target distance, the first angle, and the detection unit.

It can be learned that, a prestored correspondence may be used to determine a detection unit group corresponding to a target distance and an angle, thereby reducing real-time calculation burden and improving data processing efficiency. In another possible implementation of the first aspect, the at least one piece of echo information in the detection area is used to represent at least one of reflection intensity or a distance of the detection area.

In another possible implementation of the first aspect, the method is applied to a laser radar, the laser radar includes the scanning-type reflection module, a receiving lens, an array detector including the at least two detection units, and a diffusion device; and the diffusion device is disposed between the receiving lens and the array detector, and is configured to diffuse an optical signal passing through the receiving lens.

It can be learned that, the received optical signal is diffused by using the diffusion device, so that a signal that is supposed to be concentrated on one photoelectric conversion microcomponent can be dispersed to a surrounding photoelectric conversion microcomponent. In this way, oversaturation of a signal from a microcomponent in the array detector can be avoided. This is helpful to determine intensity information of an echo signal more accurately.

According to a second aspect, an embodiment of this application discloses a signal processing apparatus, including:

> a scanning control unit, configured to reflect first laser light to a detection area at a first angle by using a scanning-type reflection module;
> a convergence unit, configured to determine a first converged electrical signal based on at least two electrical signals from at least two detection units, where the first converged electrical signal includes at least one characteristic signal;
> a distance determining unit, configured to determine, based on time information of the at least one characteristic signal, at least one target distance corresponding to the detection area, where the at least one characteristic signal corresponds to the at least one target distance;
> a unit group determining unit, configured to determine at least one detection unit group based on the at least one target distance and the first angle, where a detection unit included in each of the at least one detection unit group belongs to the at least two detection units; and
> an echo determining unit, configured to determine at least one piece of echo information in the detection area based on a first electrical signal obtained based on at least one electrical signal from a first detection unit group in the at least one detection unit group.

In this embodiment of this application, the signal processing apparatus estimates a preliminary target distance based on a signal obtained through convergence of signals output by detection units, and determines, based on a scanning angle, a detection unit related to current detection to select a signal output by the detection unit related to the current detection, to determine echo information in the detection area. In this way, interference of an irrelevant signal is reduced, effectiveness of a received signal is improved, and a signal-to-noise ratio of the received signal is increased. In a possible implementation of the second aspect, each detection unit is one photoelectric conversion microcomponent or a set of photoelectric conversion microcomponents.

Because a signal value of one photoelectric conversion microcomponent is easily saturated, reflection intensity information in the detection area cannot be accurately represented by using an electrical signal from one photoelectric conversion microcomponent. In this embodiment of this application, when a first detection unit includes a plurality of photoelectric conversion microcomponents, signals output by the conversion microcomponents in the detection unit may be converged, and a converged signal is output, to avoid oversaturation of a finally output electrical signal. Therefore, echo information that is in the detection area and that is subsequently determined based on the electrical signal is more accurate, and it is easier to determine the reflection intensity information in the detection area.

In another possible implementation of the second aspect, the characteristic signal includes a peak signal, a front-edge signal, or a waveform centroid signal of the first converged electrical signal; and the time information is used to indicate a receiving moment of the characteristic signal.

It can be learned that, the characteristic signal in the first converged electrical signal can reflect that a relatively strong optical signal appears. In a laser radar detection process, a relatively strong optical signal is usually transmitted by a laser radar. Therefore, when the characteristic signal appears, it is highly probable that a laser radar signal is received. Therefore, echo information in laser radar detection can be obtained more accurately based on the characteristic signal. In another possible implementation of the second aspect, the at least one characteristic signal includes a first characteristic signal, the first characteristic signal is used to determine a first target distance, and the first target distance is used to determine the first detection unit group; and in the aspect of determining echo information in the detection area based on a first electrical signal obtained based on at least one electrical signal from a first detection unit group in the at least one detection unit group, the echo determining unit is specifically configured to:

determine a first time period based on time information of the first characteristic signal, where a receiving moment of the first characteristic signal is within the first time period;
obtain an electrical sub-signal that is in the first time period and that is of one electrical signal from the first detection unit group, to obtain the first electrical signal, where the first detection unit group is one of the at least one detection unit group; and
determine the at least one piece of echo information in the detection area based on the first electrical signal. It can be learned that, because the first characteristic signal can quite probably reflect that a laser signal is received, the first time period is a time period in which the laser signal is quite probably received. In addition, because the first detection unit group is a truly relevant detection unit group obtained by screening, the first electrical signal obtained based on the sub-signal that is in the first time period and that is of the signal output by the first detection unit group can more accurately reflect a receiving status of the laser signal. Therefore, the echo information obtained based on the first electrical signal is more accurate. In addition, the electrical sub-signal is used as a basic processing unit. This facilitates decoupling processing of characteristic signals in the entire electrical signal that are generated in different time periods.

In another possible implementation of the second aspect, the at least one characteristic signal includes a first characteristic signal, the first characteristic signal is used to determine a first target distance, and the first target distance is used to determine the first detection unit group; and in the aspect of determining echo information in the detection area based on a first electrical signal obtained based on at least one electrical signal from a first detection unit group in the at least one detection unit group, the echo determining unit is specifically configured to:

determine a first time period based on time information of the first characteristic signal, where a receiving moment of the first characteristic signal is within the first time period; and
obtain signals that are in the first time period and that are in a plurality of electrical signals from the first detection unit group to obtain a plurality of electrical sub-signals, where the first detection unit group is one of the at least one detection unit group, and the first electrical signal obtained by converging the plurality of electrical sub-signals is used to determine the at least one piece of echo information in the detection area.

It can be learned that, because the first characteristic signal can quite probably reflect that a laser signal is received, the first time period is a time period in which the laser signal is quite probably received. In addition, because the first detection unit group is a truly relevant detection unit group obtained by screening, the electrical signals that are in the first time period and that are in the signals output by the first detection unit group can more accurately reflect a receiving status of the laser signal. Therefore, the plurality of electrical sub-signals (or may be referred to as local signals) of the electrical signals from the plurality of detection unit groups are obtained, and the plurality of electrical sub-signals are converged to obtain the first electrical signal, so that the echo information obtained based on the first electrical signal is more accurate. The first electrical signal may be obtained by converging the plurality of electrical sub-signals by using a summation method or a cross-correlation method. In addition, the electrical sub-signal is used as a basic processing unit. This facilitates decoupling processing of characteristic signals in the entire electrical signal that are generated in different time periods.

In another possible implementation of the second aspect, in the aspect of determining at least one detection unit group based on the at least one target distance and the first angle, the unit group determining unit is specifically configured to:

determine, based on a first correspondence set, a detection unit group corresponding to the at least one target distance and the first angle, where there is a predefined correspondence between the at least one target distance, the first angle, and the detection unit.

It can be learned that, a prestored correspondence may be used to determine a detection unit group corresponding to a target distance and an angle, thereby reducing real-time calculation burden and improving data processing efficiency. In another possible implementation of the second aspect, the at least one piece of echo information in the detection area is used to represent at least one of reflection intensity or a distance of the detection area.

In another possible implementation of the second aspect, the apparatus further includes a receiving lens, an array detector including the at least two detection units, and a diffusion device; and the diffusion device is disposed between the receiving lens and the array detector, and is configured to diffuse an optical signal passing through the receiving lens.

It can be learned that, the received optical signal is diffused by using the diffusion device, so that a signal that is supposed to be concentrated on one photoelectric conversion microcomponent can be dispersed to a surrounding photoelectric conversion microcomponent. In this way, oversaturation of a signal from a microcomponent in the array detector can be avoided. This is helpful to determine intensity information of an echo signal more accurately. According to a third aspect, an embodiment of this application discloses a laser radar. The laser radar includes a laser transmitter, a scanning-type transmission module, an array detector, a memory, and a processor, where the laser transmitter is configured to transmit first laser light, the array detector includes at least two detection units, the memory stores a computer program, and the processor is configured to invoke the computer program stored in the memory, to perform the following operations:

reflecting the first laser light to a detection area at a first angle by using a scanning-type reflection module;
determining a first converged electrical signal based on at least two electrical signals from at least two detection units, where the first converged electrical signal includes at least one characteristic signal;
determining, based on time information of the at least one characteristic signal, at least one target distance corresponding to the detection area, where the at least one characteristic signal corresponds to the at least one target distance;
determining at least one detection unit group based on the at least one target distance and the first angle, where a detection unit included in each of the at least one detection unit group belongs to the at least two detection units; and
determining at least one piece of echo information in the detection area based on a first electrical signal obtained based on at least one electrical signal from a first detection unit group in the at least one detection unit group. In this embodiment of this application, the laser radar estimates a preliminary target distance based on a signal obtained through convergence of signals output by detection units, and determines, based on a scanning angle, a detection unit related to current detection to select a signal output by the detection unit related to the current detection, to determine echo information in the detection area. In this way, interference of an irrelevant signal is reduced, effectiveness of a received signal is improved, and a signal-to-noise ratio of the received signal is increased.

In a possible implementation of the third aspect, each detection unit is one photoelectric conversion microcomponent or a set of photoelectric conversion microcomponents.

Because a signal value of one photoelectric conversion microcomponent is easily saturated, reflection intensity information in the detection area cannot be accurately represented by using an electrical signal from one photoelectric conversion microcomponent. In this embodiment of this application, when a first detection unit includes a plurality of photoelectric conversion microcomponents, signals output by the conversion microcomponents in the detection unit may be converged, and a converged signal is output, to avoid oversaturation of a finally output electrical signal. Therefore, echo information that is in the detection area and that is subsequently determined based on the electrical signal is more accurate, and it is easier to determine the reflection intensity information in the detection area.

In another possible implementation of the third aspect, the characteristic signal includes a peak signal, a front-edge signal, or a waveform centroid signal of the first converged electrical signal; and the time information is used to indicate a receiving moment of the characteristic signal.

It can be learned that, the characteristic signal in the first converged electrical signal can reflect that a relatively strong optical signal appears. In a laser radar detection process, a relatively strong optical signal is usually transmitted by a laser radar. Therefore, when the characteristic signal appears, it is highly probable that a laser radar signal is received. Therefore, echo information in laser radar detection can be obtained more accurately based on the characteristic signal. In another possible implementation of the third aspect, the at least one characteristic signal includes a first characteristic signal, the first characteristic signal is used to determine a first target distance, and the first target distance is used to determine the first detection unit group; and in the aspect of determining echo information in the detection area based on a first electrical signal obtained based on at least one electrical signal from a first detection unit group in the at least one detection unit group, the processor is specifically configured to:

determine a first time period based on time information of the first characteristic signal, where a receiving moment of the first characteristic signal is within the first time period;
obtain an electrical sub-signal that is in the first time period and that is of one electrical signal from the first detection unit group, to obtain the first electrical signal, where the first detection unit group is one of the at least one detection unit group; and
determine the at least one piece of echo information in the detection area based on the first electrical signal. It can be learned that, because the first characteristic signal can quite probably reflect that a laser signal is received, the first time period is a time period in which the laser signal is quite probably received. In addition, because the first detection unit group is a truly relevant detection unit group obtained by screening, the first electrical signal obtained based on the sub-signal that is in the first time period and that is of the signal output by the first detection unit group can more accurately reflect a receiving status of the laser signal. Therefore, the echo information obtained based on the first electrical signal is more accurate. In addition, the electrical sub-signal is used as a basic processing unit. This facilitates decoupling processing of characteristic signals in the entire electrical signal that are generated in different time periods.

In another possible implementation of the third aspect, the at least one characteristic signal includes a first characteristic signal, the first characteristic signal is used to determine a first target distance, and the first target distance is used to determine the first detection unit group; and in the aspect of determining echo information in the detection area based on a first electrical signal obtained based on at least one electrical signal from a first detection unit group in the at least one detection unit group, the processor is specifically configured to:

determine a first time period based on time information of the first characteristic signal, where a receiving moment of the first characteristic signal is within the first time period; and
obtain signals that are in the first time period and that are in a plurality of electrical signals from the first detection unit group to obtain a plurality of electrical sub-signals, where the first detection unit group is one of the at least one detection unit group, and the first electrical signal obtained by converging the plurality of electrical sub-signals is used to determine the at least one piece of echo information in the detection area.

It can be learned that, because the first characteristic signal can quite probably reflect that a laser signal is received, the first time period is a time period in which the laser signal is quite probably received. In addition, because the first detection unit group is a truly relevant detection unit group obtained by screening, the electrical signals that are in the first time period and that are in the signals output by the first detection unit group can more accurately reflect a receiving status of the laser signal. Therefore, the plurality of electrical sub-signals (or may be referred to as local signals) of the electrical signals from the plurality of detection unit groups are obtained, and the plurality of electrical sub-signals are converged to obtain the first electrical signal, so that the echo information obtained based on the first electrical signal is more accurate. The first electrical signal may be obtained by converging the plurality of electrical sub-signals by using a summation method or a cross-correlation method. In addition, the electrical sub-signal is used as a basic processing unit. This facilitates decoupling processing of characteristic signals in the entire electrical signal that are generated in different time periods.

In another possible implementation of the third aspect, in the aspect of determining the at least one detection unit group based on the at least one target distance and the first angle, the processor is specifically configured to:
determine, based on a first correspondence set, a detection unit group corresponding to the at least one target distance and the first angle, where there is a predefined correspondence between the at least one target distance, the first angle, and the detection unit.

It can be learned that, a prestored correspondence may be used to determine a detection unit group corresponding to a target distance and an angle, thereby reducing real-time calculation burden and improving data processing efficiency. In another possible implementation of the third aspect, the at least one piece of echo information in the detection area is used to represent at least one of reflection intensity or a distance of the detection area.

In another possible implementation of the third aspect, the laser radar further includes a diffusion device; and the diffusion device is disposed between a receiving lens and the array detector, and is configured to diffuse an optical signal passing through the receiving lens.

It can be learned that, to avoid saturation of a signal value output by one photoelectric conversion microcomponent in a detection unit, the received optical signal is diffused by using the diffusion device, so that a signal that is supposed to be concentrated on one photoelectric conversion microcomponent can be dispersed to a surrounding photoelectric conversion microcomponent. In this way, oversaturation of a signal from a microcomponent in the array detector is avoided. This is helpful to determine intensity information of an echo signal more accurately.

In another possible implementation of the third aspect, the laser radar further includes a data collection module; and the data collection module is configured to collect a signal output by the array detector, and is further configured to preprocess the signal output by the array detector.

According to a fourth aspect, an embodiment of this application discloses a signal processing device. The signal processing device includes a memory and a processor, and the memory stores a computer program. When the computer program is run on the processor, the method according to any one of the first aspect or the possible implementations of the first aspect is performed.

According to a fifth aspect, an embodiment of this application discloses a computer-readable storage medium. The computer-readable storage medium stores a computer program. When the computer program is run on one or more processors, the method according to any one of the first aspect or the possible implementations of the first aspect is performed.

According to a sixth aspect, an embodiment of this application discloses a sensor system. The sensor system may include at least one sensor. The sensor includes the signal processing apparatus in the second aspect, the laser radar in the third aspect, or the signal processing device in the fourth aspect. The sensor system is configured to implement the method according to any one of the first aspect or the possible implementations of the first aspect.

According to a seventh aspect, an embodiment of this application discloses a vehicle. The vehicle includes the sensor system in the sixth aspect.

According to an eighth aspect, an embodiment of this application discloses a chip system. The chip system includes at least one processor, a memory, and an interface circuit. The interface circuit is configured to connect an external device (for example, a laser transmitter, a scanning-type reflection module, or an array detector) to the processor, and the memory stores a computer program. When being executed by the processor, the computer program is used to implement the method according to any one of the first aspect or the possible implementations of the first aspect. Further, the memory, the interface circuit, and the at least one processor may be connected to each other by using a line.

According to a ninth aspect, an embodiment of this application discloses a terminal. The terminal includes the laser radar according to any one of the third aspect or the possible implementations of the third aspect. Further, the terminal may be a mobile terminal or a transportation tool that needs to perform target detection, for example, a vehicle, an unmanned aerial vehicle, a train, or a robot.

## BRIEF DESCRIPTION OF DRAWINGS

The following describes accompanying drawings used in embodiments of this application.

FIG. 1 is a schematic diagram of a structure of a laser radar according to an embodiment of this application;

FIG. 2 is a flowchart of a signal processing method according to an embodiment of this application;

FIG. 3 is a schematic diagram of a structure of an array detector according to an embodiment of this application;

FIG. 4(a), FIG. 4(b), FIG. 4(c), FIG. 4(d) are schematic diagrams of an electrical signal from a detection unit according to an embodiment of this application;

FIG. 5 is a schematic diagram of a signal convergence method according to an embodiment of this application;

FIG. 6 is a schematic diagram of a possible detection unit group according to an embodiment of this application;

FIG. 7 is a schematic diagram of a method for determining a detection unit group according to an embodiment of this application;

FIG. 8 is a schematic diagram of an electrical signal from a detection unit according to an embodiment of this application;

FIG. 9 is a schematic diagram of another electrical signal from a detection unit according to an embodiment of this application;

FIG. 10 is a schematic diagram of another electrical signal from a detection unit according to an embodiment of this application;

FIG. 11 is a schematic diagram of another electrical signal from a detection unit according to an embodiment of this application;

FIG. 12 is a schematic diagram of a radar imaging scenario according to an embodiment of this application;

FIG. 13 is a schematic diagram of a structure of a signal processing apparatus according to an embodiment of this application; and

FIG. 14 is a schematic diagram of a structure of a signal processing device according to an embodiment of this application.

## DESCRIPTION OF EMBODIMENTS

The following describes the embodiments of this application with reference to the accompanying drawings in the embodiments of this application.

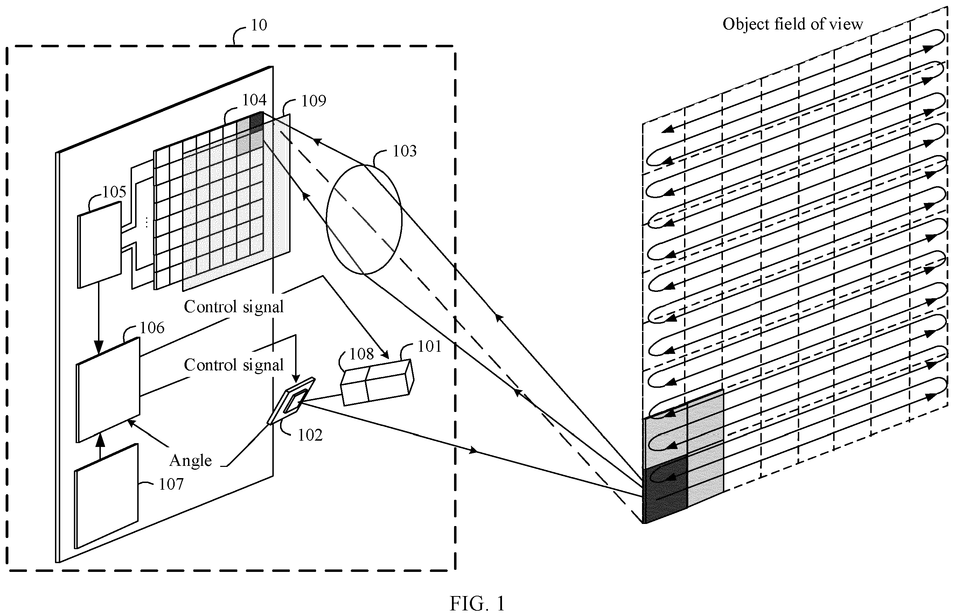

FIG. 1 is a schematic diagram of a structure of a laser radar 10 according to an embodiment of this application. The laser radar includes a laser transmitter 101, a scanning-type reflection module 102, a receiving lens 103, an array detector 104, a data processing module 105, a processor 106, and a memory 107.

The laser transmitter 101 is an apparatus for transmitting laser light, and can transmit laser pulses at a preset time interval.

The scanning-type reflection module 102 is a reflecting mirror that can swing (or rotate), and performs reciprocating motion in one-dimensional space or two-dimensional space to reflect laser light at different angles, so that the laser light is irradiated within a corresponding scanning field of view for transmission. Therefore, the scanning-type reflection module 102 may also be referred to as a scanning mirror or a reflecting mirror. Common scanning-type reflection modules 102 include a mechanical mirror, a micro-electro-mechanical system (micro-electro-mechanical system, MEMS) micro-vibration mirror, and the like. The MEMS micro-vibration mirror has a mirror size of several millimeters, and has great advantages in a volume, power consumption, and integration performance. In addition, the MEMS micro-vibration mirror has a relatively high swing frequency, and has a relatively high frame rate.

The receiving lens 103 is a component configured to receive an optical signal, and may be one or more concave lenses, convex lenses, concave-convex lenses, meniscus lenses, or optical lenses in another shape. In some possible implementations, the receiving lens may further include a component that helps receive an optical signal, for example, an optical filter.

The array detector 104 is a detection unit array arranged in rows and columns, and includes at least two detection units (each square in the array detector 104 is one detection unit). The array detector 104 may receive an optical signal converged by the receiving lens 103, and convert the optical signal into an electrical signal. The array detector 104 includes at least two detection units. Array detectors may be classified into a semiconductor avalanche photodiode (avalanche photo detector, APD) array, a single-photon avalanche diode (single-photon avalanche diode, SPAD) array, and the like based on different photoelectric conversion microcomponents in detection units. Array detectors may be classified into a $1\times2$ array, a $2\times2$ array, a $3\times3$ array, and an array with another specification based on an arrangement rule of detection units. The array detector may be disposed before a plane on which a focal point of the receiving lens 103 is located, on the plane on which the focal point is located, or after the plane on which the focal point is located. The data collection module 105 is configured to collect a signal output by a detection unit in the array detector 104, and is further configured to perform preprocessing such as signal amplification, shaping, or analog-to-digital conversion on an electrical signal from the array detector 104.

The processor 106 is configured to: control the laser transmitter 101 to transmit laser light, control the scanning-type reflection module 102 to reflect the laser light at a preset angle, and process electrical signals output by at least two detection units. The processor 106 is a module for performing an arithmetic operation and a logical operation, is a calculation core and a control core of the laser radar, and can parse various instructions in the laser radar and process a variety of data. Specifically, the processor 106 may be one or more central processing units (central processing unit, CPU), graphics processing units (graphics processing unit, GPU), microprocessor units (microprocessor unit, MPU), or other modules. Optionally, an electrical signal collection function completed by the data processing module 105 may alternatively be completed by the processor 106.

The memory 107 is configured to provide storage space, to store data such as an operating system and a computer program. The memory 107 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). Optionally, the laser radar further includes a collimation apparatus 108. The collimation apparatus 108 is disposed between the laser transmitter 101 and the scanning-type reflection module 102, so that a laser beam transmitted from the laser transmitter 101 can be more intensively incident on the scanning-type reflection module 102. This improves transmission efficiency and increases an angular resolution of the laser radar.

Optionally, the laser radar may further include a diffusion device 109. The diffusion device 109 is disposed between the receiving lens 103 and the array detector 104, and is configured to diffuse an optical signal passing through the receiving lens, to avoid oversaturation of an optical signal from a microcomponent in a detection unit. This is helpful to accurately estimate intensity information of an echo signal. Optionally, the diffusion device may be an entire diffuser, and is laid in front of the array detector and covers all detection units; or the diffusion device may be a plurality of diffusers, and one of the plurality of diffusers is laid in front of one or more detection areas and is configured to diffuse an optical signal.

In one detection process of the laser radar, the processor 101 controls the laser transmitter 102 to transmit first laser light and controls the scanning-type reflection module to reflect the first laser light to a detection area. An optical signal is reflected from the detection area and is irradiated on the array detector 105. Correspondingly, the array detector 105 converts the received optical signal into an electrical signal. The data processing module 107 is configured to collect an electrical signal output by a detection unit in the array detector 105. The processor 101 is configured to: control the laser transmitter 102 to transmit laser light, control the scanning-type reflection module to reflect the laser light at a preset angle, and process electrical signals output by at least two detection units, to obtain echo information from a detection area.

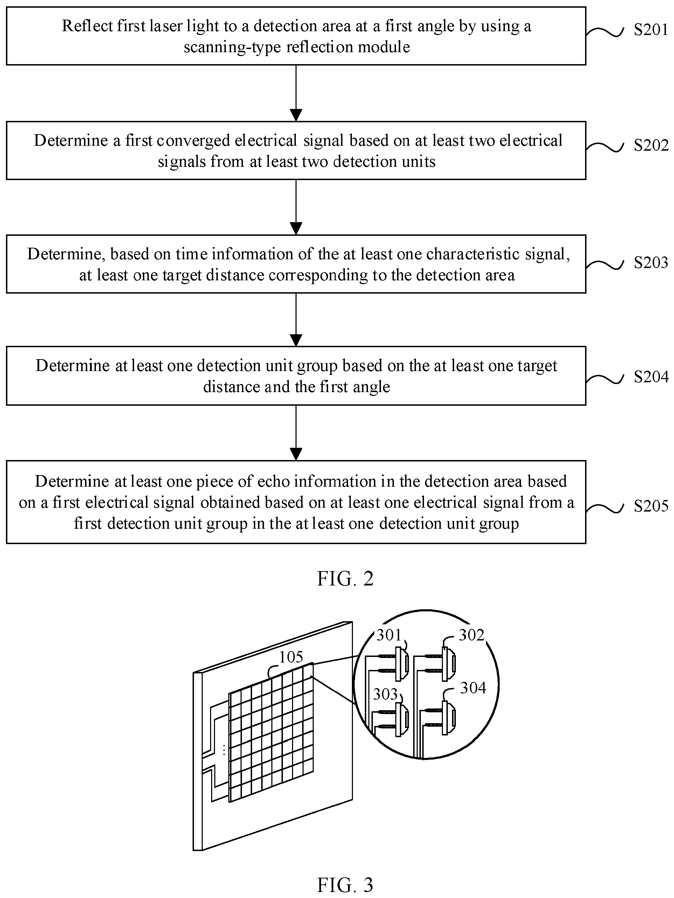

FIG. 2 is a schematic flowchart of a signal processing method according to an embodiment of this application. The method may be implemented based on the foregoing laser radar, and the method includes but is not limited to the following steps.

Step S201: The laser radar reflects first laser light to a detection area at a first angle by using the scanning-type reflection module.

Specifically, the first laser light may be a laser beam transmitted by the laser transmitter. For example, the laser transmitter transmits laser pulses at a preset time interval, and the first laser light is a laser pulse signal in the laser pulses.

The scanning-type reflection module in the laser radar can reflect laser light at a plurality of angles. The first angle herein is one of the angles. Optionally, the first angle may be represented by using one or more dimensions. For example, the first angle may be represented in a form of [azimuth angle, elevation angle]. The azimuth angle may represent an angle in a horizontal direction, and the elevation angle may represent an angle in a vertical direction. Step S202: The laser radar determines a first converged electrical signal based on at least two electrical signals from at least two detection units.

Specifically, the detection unit may be one photoelectric conversion microcomponent, or may be a set of photoelectric conversion microcomponents. The photoelectric conversion microcomponent is a device that can convert an optical signal into an electrical signal. For example, the photoelectric conversion microcomponent may be one of a photomultiplier tube (photomultiplier tube, PMT), a silicon photomultiplier (silicon photomultiplier, SiPM), a semiconductor avalanche photodiode (avalanche photo detector, APD), a single-photon avalanche diode (single-photon avalanche diode, SPAD), or another photoelectric device. Optionally, photoelectric devices in the set of the plurality of conversion microcomponents may be different photoelectric conversion devices.

When a detection unit includes a plurality of photoelectric conversion microcomponents, signals output by the photoelectric conversion microcomponents in the detection unit may be converged, and one electrical signal is finally output. For example, FIG. 3 is a schematic diagram of a structure of an array detector according to an embodiment of this application. There are a plurality of subareas (each square is one subarea) in the array detector 104, and each subarea represents one detection unit. In the array detector 104 shown in FIG. 3, one detection unit is a set of four photoelectric conversion microcomponents, in other words, four photoelectric conversion microcomponents are disposed in one detection unit. One of the detection units is used as an example. The detection unit includes a first photoelectric conversion microcomponent 301, a second photoelectric conversion microcomponent 302, a third photoelectric conversion microcomponent 303, and a fourth photoelectric conversion microcomponent 304. Electrical signals from the first photoelectric conversion microcomponent 302, the second photoelectric conversion microcomponent 303, the third photoelectric conversion microcomponent 304, and the fourth photoelectric conversion microcomponent 305 may be converged, and a converged signal is output. The total signal output after convergence of the electrical signals is an electrical signal output by the detection unit.

The detection unit may obtain a corresponding electrical signal based on an optical signal. It can be understood that, when another optical signal within a detection band range of a selected photoelectric detection unit is irradiated on the detection unit, the another optical signal is also converted into an electrical signal. For example, when sunlight is irradiated on the detection unit, the detection unit also converts the sunlight into an electrical signal. For another example, an optical signal transmitted by another device (for example, another radar device) is reflected to the detection unit, the optical signal is also converted into an electrical signal. These irrelevant signals affect an optical signal returned from a detection area. In addition, the electrical signal output by the detection unit may be affected by a current on another line. These signals irrelevant to the signal returned from the detection area form noise, causing interference to the output signal. As a result, a signal-to-noise ratio of an echo signal received by the radar is reduced, and effectiveness of the signal received by the radar is affected.

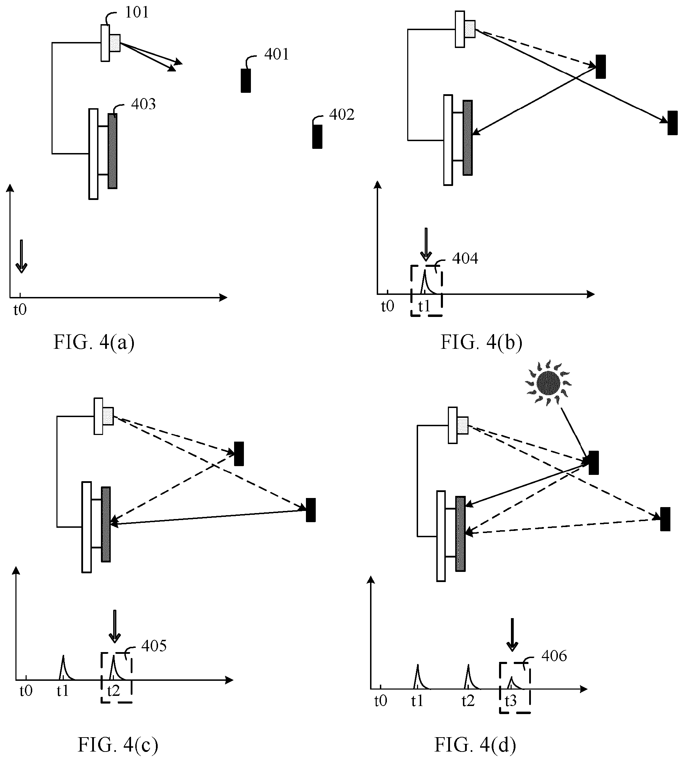

FIG. 4(a), FIG. 4(b), FIG. 4(c), FIG. 4(d) are schematic diagrams of an electrical signal from a detection unit according to an embodiment of this application. The laser transmitter 101 transmits laser light at a preset time interval. A transmitted laser pulse beam is irradiated to a corresponding detection area. Two objects, namely, an object 401 and an object 402, are included in the detection area corresponding to the current laser pulse. Refer to FIG. 4(a). For example, the preset time interval is 10 microseconds (μs). The laser transmitter 101 transmits first laser light at t0 (0 μs). The first laser light is irradiated on the object 401 and the object 402. Refer to FIG. 4(b). A detection unit 403 in the array detector receives, at approximately a moment t1 (5 μs), an optical signal returned by the object 401, and obtains an electrical signal based on the returned optical signal. For the electrical signal, refer to waveform information shown in an area 404. Refer to FIG. 4(c). The detection unit 403 receives, at approximately a moment t2 (8 μs), an optical signal returned by the object 402, and obtains an electrical signal based on the returned optical signal. For the electrical signal, refer to waveform information shown in an area 405. Refer to in FIG. 4(d). Because sunlight is irradiated on the object 401, the object 401 reflects the sunlight to the array detector 104. The detection unit 403 receives the sunlight reflected by the object 401, and obtains an electrical signal based on the sunlight. For the electrical signal, refer to waveform information shown in an area 406. At 10 μs, detection of the current laser pulse ends, and the laser transmitter transmits a next pulse to start a new round of detection.

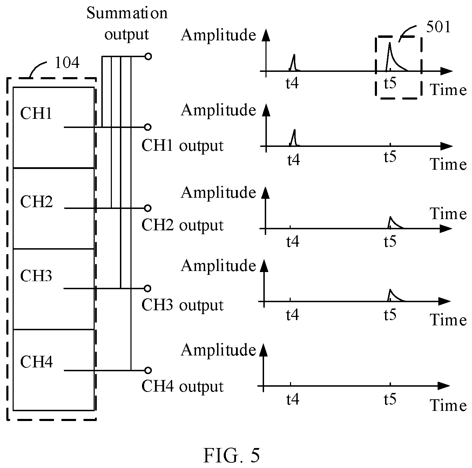

In this embodiment of this application, a manner of determining the first converged electrical signal may specifically be: performing summation on the at least two electrical signals from the at least two detection units to obtain the first converged electrical signal. FIG. 5 is a schematic diagram of a possible signal convergence method according to an embodiment of this application. The array detector 104 includes at least two detection units, and the at least two detection units are specifically a detection unit CH1, a detection unit CH2, a detection unit CH3, and a detection unit CH4. The laser radar performs summation point by point on electrical signals output by CH1, CH2, CH3, and CH4, to obtain a converged electrical signal. For example, summation is performed on signals that are at a moment t1 and that are in the electrical signals output by CH1, CH2, CH3, and CH4, to obtain a signal that is at the moment t1 and that is in a converged electrical signal. For another example, summation is performed on signals that are at a moment t5 and that are in the electrical signals output by CH1, CH2, CH3, and CH4, to obtain a signal that is at the moment t5 and that is in a converged electrical signal.

The first converged electrical signal includes at least one characteristic signal, and the characteristic signal may be a signal indicating a special waveform characteristic, for example, a peak signal, a front-edge signal (or referred to as a rising edge signal), or a waveform centroid signal. Optionally, the characteristic signal may be determined through signal detection. During signal detection, a detection threshold may be preset, and only a signal whose signal value is greater than or equal to the preset threshold can be detected as a characteristic signal. A peak signal is a signal corresponding to a largest signal value within a time period, a front-edge signal is a signal segment whose signal value continuously increases within a time period, and a waveform centroid signal is a signal corresponding to a centroid position of a piece of waveform information. For example, as shown in FIG. 5, a signal in an area 501 is a characteristic signal. The characteristic signal can reflect that a relatively strong optical signal appears in a converged electrical signal. In a laser radar detection process, a relatively strong optical signal is usually transmitted by the laser radar. Therefore, when the characteristic signal appears, it is highly probable that a laser radar signal is received. Therefore, echo information in laser radar detection can be obtained more accurately based on the characteristic signal. Optionally, before the first converged electrical signal is determined, the data collection module may be used to collect an electrical signal output by a detection unit in the array detector. The data collection module may be further configured to perform preprocessing on the electrical signal from the detection unit, for example, perform amplification, shaping, or analog-to-digital conversion on the signal from the detection unit, to facilitate subsequent convergence of electrical signals output by detection units.

Step S203: The laser radar determines at least one corresponding target distance based on time information of the at least one characteristic signal.

Specifically, the characteristic signal corresponds to received time information. For example, the characteristic signal is a peak signal, and time information of the peak signal is a moment at which a peak value appears. For another example, the characteristic signal is a front-edge signal, and a time information waveform of the front-edge signal may be an intermediate moment of a rising edge.

That the laser radar determines, based on time information of the at least one characteristic signal, at least one target distance corresponding to the detection area may specifically be: The laser radar obtains a laser flight time difference based on the time information of the characteristic signal and a time at which the first laser light is transmitted, and may determine, based on a speed of light and the time difference, the target distance corresponding to the detection area. The target distance may be used to represent a distance between the laser radar and an object in the detection area. Scenarios shown in FIG. 4(a), FIG. 4(b), FIG. 4(c), FIG. 4(d) are used as an example. The laser transmitter transmits laser light at the moment t0, and receives a characteristic signal 403 at the moment t1. In this case, a flight time difference (t2-t1) of the laser light can be obtained based on a time difference between the moment t1 and the moment t0. A target distance D corresponding to a detection area may be determined based on the speed of light and the time difference, in other words, D=(t2-t1)*c/2 (c is a speed of the laser light). In the at least one characteristic signal in the first converged signal, one characteristic signal may be used to determine one target distance corresponding to the detection area. For example, if there are a characteristic signal 1 and a characteristic signal 2, a target distance D1 may be obtained by performing the foregoing operation based on the characteristic signal 1, and a target distance D2 may be obtained by performing the foregoing operation based on the characteristic signal 2.

Step S204: The laser radar determines at least one detection unit group based on the at least one target distance and the first angle.

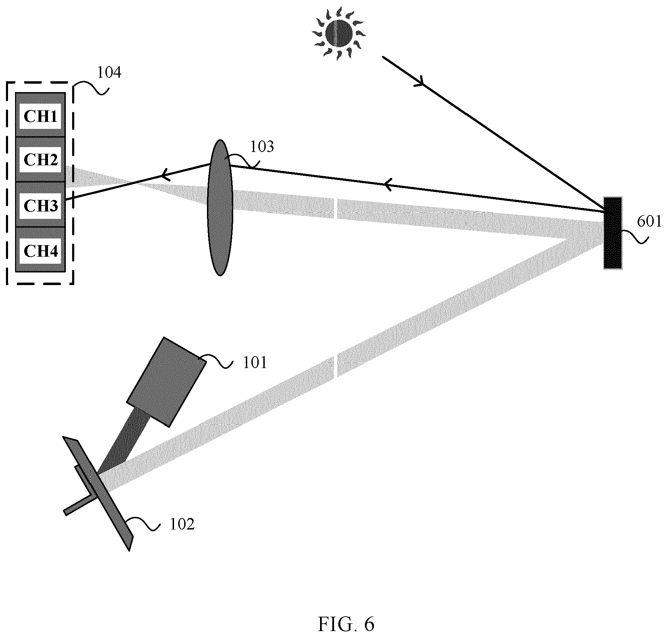

Specifically, there is a correspondence between a detection unit, and a distance corresponding to a detection area and an angle of the scanning-type reflection module. For ease of description, one or more detection units corresponding to the target distance and the first angle are referred to as a detection unit group. FIG. 6 is a schematic diagram of a possible detection unit group according to an embodiment of this application. The laser transmitter 101 transmits first laser light at a moment; and the first laser light is irradiated on an object 601 in a detection area after being reflected by the scanning-type reflection module 102 at an angle θ. The object 601 reflects an optical signal. When the optical signal is irradiated on the detection units CH1 and CH2 of the array detector 104 after being converged by the receiving lens 103, the optical signal is converted into electrical signals. Therefore, in an example in which a distance corresponding to the object 601 is d1, at the angle θ, a detection unit group corresponding to an object whose target distance is d1 is a group including CH1 and CH2. Because positions and properties of the laser transmitter 101, the scanning-type reflection module 102, the receiving lens 103, and the array detector 104 (for example, a focal length of the receiving lens) may be preset, there is a correspondence between a detection unit on which an optical signal returned from a detection area is irradiated, and an angle for reflecting laser light and the distance of the object 601. The laser radar determines the at least one detection unit group based on the at least one target distance and the first angle by using the following several optional solutions:

Solution 1: A correspondence set including at least one group of correspondences is predefined, and the detection unit group corresponding to the at least one target distance and the first angle is determined based on the correspondence set. Specifically, the correspondence set may be prestored in the laser radar, or may be preconfigured for the laser radar. Due to interference of an irrelevant signal, there is a detection unit group that does not correspond to the target distance or the first angle. In this case, the laser radar may consider that a signal corresponding to a case in which there is no corresponding detection unit is a false alarm signal. Table 1 lists a possible correspondence set. The correspondence set is used to describe a detection unit group corresponding to the at least one target distance and the first angle. The first angle may be represented by using [azimuth angle, pitch angle]. It can be learned that, when a target distance is 100 meters (m), an azimuth angle is 30°, and a pitch angle is 30°, a detection unit group determined by the laser radar is detection units CH1, CH2, CH3, and CH4. When a target distance is 250 m, an azimuth angle is 60°, and a pitch angle is 60°, the laser radar system finds no corresponding detection unit group from the correspondence set. In this case, the laser radar considers that a signal for determining that the target distance is 250 m is a false alarm signal.

Table 1 Correspondence set

| Distance (m) | Angle (°) | Detection unit group |
|---|---|---|
| 100 | [30, 30] | CH1, CH2, CH3, CH4 |
| 120 | [30, 30] | CH1, CH2, CH3 |
| 140 | [30, 30] | CH1, CH2, CH3 |
| 160 | [30, 30] | CH2, CH3 |
| 180 | [30, 30] | CH2 |
| 250 | [60, 60] | Null |

Solution 2: The detection unit group corresponding to the target distance and the first angle is determined by using a preset algorithm. Further, the determining operation may be performed in real time. The laser radar may determine the corresponding detection unit group by using a prestored algorithm, or the laser radar obtains the corresponding detection unit group determined by using the preset algorithm. For example, the laser radar may send the target distance and the first angle to another device; and the another device obtains, through calculation, the corresponding detection unit group by using the preset algorithm, and returns the corresponding detection unit group. The algorithm may be an algorithm obtained based on model training, or may be an algorithm obtained by solving a geometric relationship. This is not specifically limited. Two possible manners of obtaining the corresponding detection unit group through calculation are described below by using examples:

Manner 1: Laser light is transmitted to an object at a known distance based on a known angle, and a number of a detection unit that is in the array detector and that receives a returned signal is recorded; and a corresponding record is used as a sample, and an algorithm for determining a detection unit group is obtained by accumulating sample data. For example, at an angle θ, laser light is irradiated on objects at different distances $D_n$, and numbers $CH_{ij}$ of detection units corresponding to optical signals returned by the objects are recorded. i is a row number of an array detection unit, and j is a column number of the array detection unit. In this case, $CH_{ij}$ may represent a detection unit in the $i^{th}$ row and the $j^{th}$ column. For example, $CH_{23}$ represents a detection unit in the second row and the third column. Optionally, another number form may be used to represent a detection unit number. For example, a number subscript is used as a detection unit number. This is not limited herein. For example, $CH_n$ represents the $n^{th}$ detection unit. In this case, $CH_{12}$ represents the tenth detection unit. A distance $D_n$, a scanning angle $\theta$, and a detection unit number $CH_{ij}$ are used as a piece of training sample data, and an algorithm for determining a detection unit group may be obtained based on a preset quantity of pieces of training sample data. Based on the algorithm, a target distance and a scanning angle are used as an input, and a detection unit group corresponding to the input target distance and the input scanning angle may be obtained.

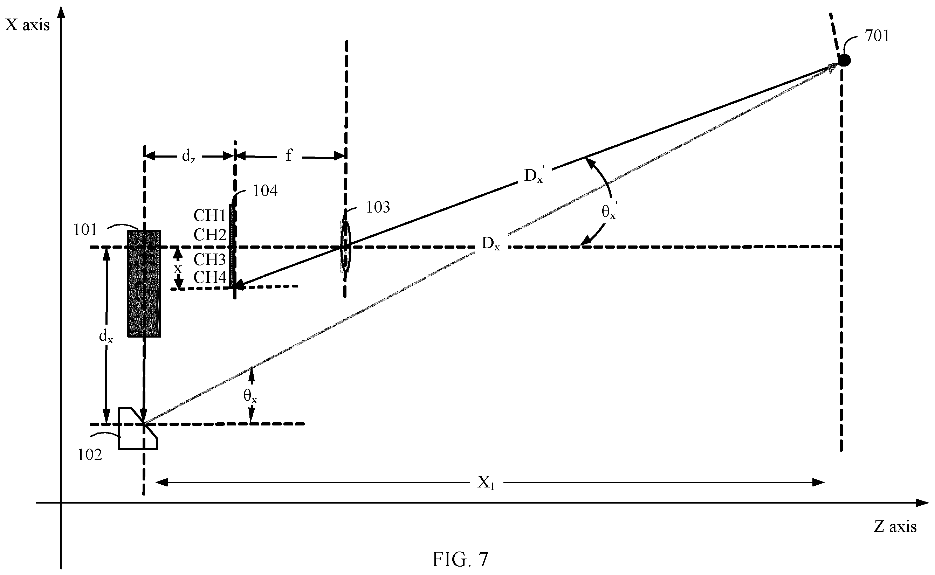

Manner 2: A geometric position that is on a detection unit and at which an optical signal is irradiated is obtained through calculation based on a geometric relationship, to obtain the corresponding detection unit group. In the laser radar, the positions and the properties of the laser transmitter 101, the scanning-type reflection module 102, the receiving lens 103, and the array detector 104 (for example, the focal length of the receiving lens) may be known in advance. Therefore, by using a position parameter of each module as a known parameter, the corresponding detection unit group may be obtained based on the target distance and the first angle by solving a geometric relationship. FIG. 7 is a schematic diagram of a method for determining a detection unit group according to an embodiment of this application. A Z-axis projection $X_1$ of a distance from a center of the scanning-type reflection module 102 (or referred to as a scanning reflecting mirror) to a detection area 701 and a distance x from an optical signal position that corresponds to the detection area 701 and that is on the array detector to a receiving principal optical axis satisfy the following geometric relationships:

$$\frac{X_1}{\tan\theta_x} - d_x = D_x \times \sin\theta_x{}'(1\text{-}1)$$

$$X_1 = d_z + f + D_x{}' \times \cos\theta_x{}'(1\text{-}2)$$

$$\frac{x}{f} = \tan\theta_x(1\text{-}3)$$

$\theta_x$ represents a scanning angle in an x direction. $\theta_x'$ is an included angle between a projection of a connecting line between the detection area 701 and a center of the receiving lens 103 on an X-Z plane and the receiving principal optical axis. When $D_x$ is far greater than $d_x$, it may be considered that $\theta_x' \approx \theta_x$. $d_x$ represents an X-axis projection of a distance from the center of the scanning-type reflection module 102 to an axis of the array detector 104, $D_x$ represents an X-axis projection of a distance from the center of the scanning-type reflection module 102 to the detection area 701, and $D_x'$ represents a projection of a distance from the detection area 701 to the center of the receiving lens 103 on the X-Z plane. Because a size of the laser radar is generally far smaller than a distance of the laser radar to the detection area, $D_x$ and $D_x'$ each can be regarded as a target distance. $d_z$ represents a Z-axis projection of the distance from the center of the scanning-type reflection module 102 to the axis of the array detector 104, and x represents a distance from a detection position that corresponds to the detection area 701 and that is on the array detector to the receiving principal optical axis. Each parameter may be positive or negative. The laser radar may determine, based on the foregoing geometric relationships, a geometric relationship algorithm for calculating a distance from an optical signal position that corresponds to a detection area and that is on the array detector to a center of the principal optical axis, to determine a corresponding detection unit group based on the distance from the optical signal position to the principal optical axis.

For example, by substituting $D_x = Dx'$ and $\theta_x' = \theta_x$ into formula 1-1, formula 1-2, and formula 1-3, the following formulas can be obtained:

$$X_1 = \frac{\left(\frac{2d_x}{\tan\theta_x} + 2(d_z+f)\right) \pm \sqrt{\left(\frac{2d_x}{\tan\theta_x} + 2(d_x+f)\right)^2 - 4\left(\frac{1}{\tan\theta_x}+1\right)\left(d_z+(d_z+f)^2-D_x{}^2\right)}}{2\left(\frac{1}{\tan\theta_x}+1\right)}(1\text{-}4)$$

$$x = f \times \frac{X_1 - d_x\tan\theta_x}{(X_1 - d_x - f)\tan\theta_x}(1\text{-}5)$$

The laser radar may use the foregoing formula 1-5 as an algorithm for calculating the distance from the optical signal position that corresponds to the detection area and that is on the array detector to the receiving principal optical axis, to determine the corresponding detection unit group based on the distance from the optical signal position to the principal optical axis.

Optionally, the correspondence set in the solution 1 may be obtained through calculation in advance by using the calculation manner in the solution 2.

Step S205: The laser radar determines at least one piece of echo information in the detection area based on a first electrical signal obtained based on at least one electrical signal from a first detection unit group in the at least one detection unit group.

Specifically, the first detection unit group is one of the at least one detection unit group. There may be one or more detection units in the first detection unit group. The following provides descriptions based on cases.

Case 1: The first detection unit group includes one detection unit. The laser radar obtains a sub-signal (or expressed as a local signal) that is in a first time period and that is of one electrical signal from the detection unit, and uses the sub-signal as the first electrical signal. The first electrical signal is used to determine the at least one piece of echo information in the detection area. For ease of description, a target distance used to determine the first detection unit group is referred to as a first target distance, a characteristic signal used to determine the first target distance is referred to as a first characteristic signal, and the first characteristic signal is a characteristic signal in the first converged signal. The first time period may be determined by the laser radar based on time information of the first characteristic signal, and a moment indicated (or represented) by the time information of the first characteristic signal is within the first time period. Optionally, a length of the first time period is a preset time length or a time length determined according to a corresponding rule.

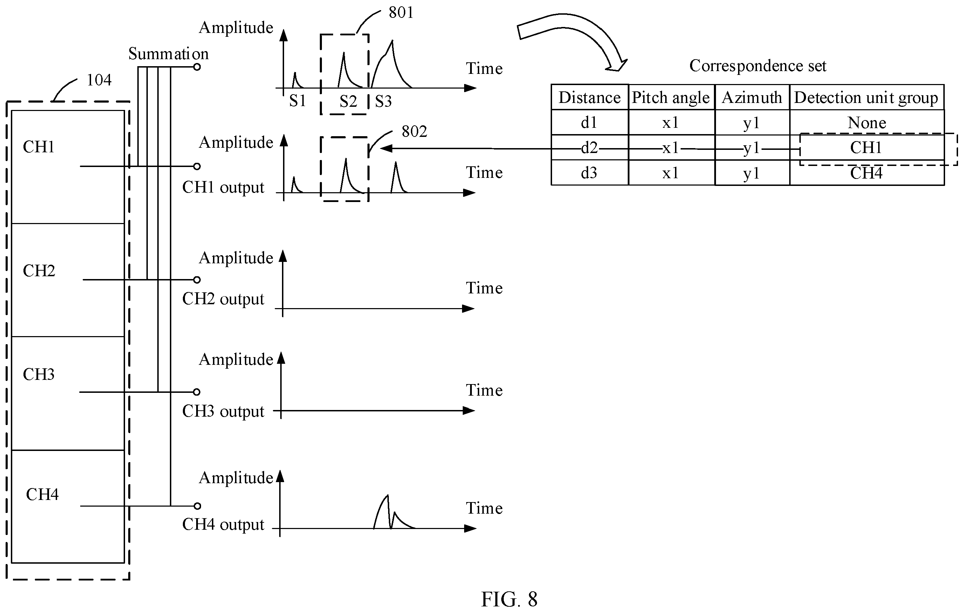

For example, FIG. 8 is a schematic diagram of a possible electrical signal from a detection unit according to an embodiment of this application. The array detector 104 includes four detection units: CH1, CH2, CH3, and CH4. When a laser pulse is transmitted, the current laser pulse is reflected to a detection area at a first angle (an angle determined based on a pitch angle x1 and an azimuth angle y1). The four detection units respectively output four electrical signals; and the laser radar converges the four electrical signals to obtain a first converged electrical signal. That a characteristic signal is a peak signal is used as an example. The first converged electrical signal includes three characteristic signals: a characteristic signal S1, a characteristic signal S2, and a characteristic signal S3. If a moment corresponding to a peak value of a characteristic signal is used as time information of the characteristic signal, the laser radar may determine three target distances based on time information of the three characteristic signals. For example, the characteristic signal S2 in an area 801 may be used to determine a distance d2. A corresponding detection unit group may be determined based on a target distance and an angle. For example, it may be determined, based on d2 and the first angle (x1, y1) corresponding to the current pulse, that a corresponding detection unit group includes the detection unit CH1. The laser radar determines a first time period that has a preset time length and that includes a moment corresponding to the characteristic signal S2. For example, the preset time length is 100 ns. The laser radar may obtain a sub-signal (for example, a signal shown in an area 802) that is in the first time period and that is of an electrical signal output by CH1, as a first electrical signal. Then, the laser radar may determine a piece of echo information in the detection area based on the first signal. It should be noted that, the target distance determined based on the characteristic signal S1 is d1, and there is no detection unit group corresponding to the target distance d1 and the first angle (x1, y1). Therefore, the laser radar may determine that the characteristic signal S1 is a false alarm signal, and the characteristic signal S1 is not used in a subsequent processing process.

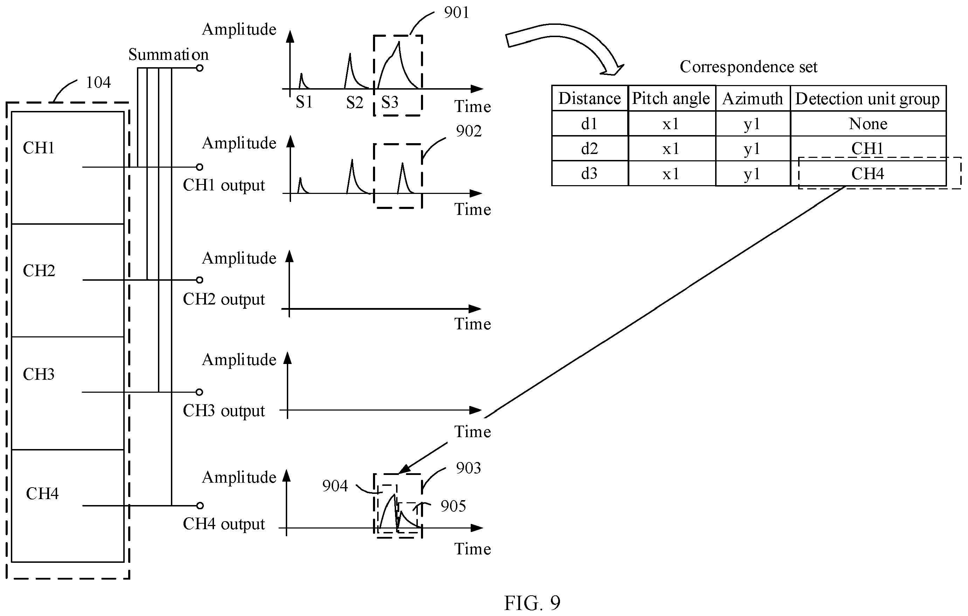

For another example, FIG. 9 is a schematic diagram of a possible electrical signal from a detection unit according to an embodiment of this application. The array detector 104 includes four detection units: CH1, CH2, CH3, and CH4. For example, a characteristic signal S3 in an area 901 may be used to determine a distance d3. It may be determined, based on d3 and a first angle (x1, y1), that a corresponding detection unit group includes a detection unit CH4. The laser radar determines a first time period that has a preset time length and that includes a moment corresponding to the characteristic signal S3. For example, the preset time length is 100 ns. The laser radar may obtain a sub-signal (for example, an area 903) that is in the first time period and that is of an electrical signal output by CH4, as a first electrical signal. Due to interference of a signal in an area 902, the determined first electrical signal includes two waveform signal segments (a signal in an area 904 and a signal in an area 905). In this case, the first electrical signal is used to determine two pieces of echo information (one of the waveform signal segments is used to determine one echo signal), or the two waveform signal segments in the first electrical signal are used to jointly determine one piece of echo information.

Case 2: The first detection unit group includes a plurality of detection units. The laser radar obtains a plurality of sub-signals that are in a first time period and that are of electrical signals from the plurality of detection units (an electrical signal from one detection unit is used to obtain one sub-signal in the first time period), and converges the plurality of sub-signals to obtain a first electrical signal. The first electrical signal is used to determine the at least one piece of echo information in the detection area. Optionally, the converging the plurality of sub-signals to obtain a first electrical signal may include: performing summation or cross-correlation processing on the plurality of sub-signals to obtain the first electrical signal. Summation means adding up values of signals that are at a moment and that are in a signal segment. For example, a value of a signal from CH1 at a moment t1 is S1, and a value of a signal from CH2 at the moment t1 is S2; and in this case, summation is performed on the values of the signals from CH1 and CH2. An obtained value of a converged signal at the moment t1 may be represented as S1+S2. Cross-correlation is a signal processing method. Calculation is performed on one signal segment and another signal segment point by point by using a cross-correlation function. Each time calculation is performed, one cross-correlated value is obtained. These cross-correlated values can reflect a correlation degree of the two signal segments at relative positions. Therefore, the cross-correlation function is an important method for extracting an effective signal from a noise signal, and is also referred to as correlation filtering. The cross-correlation function may have a plurality of definitions, or a method for calculating a cross-correlation function may be defined. This is not limited herein. For example, the cross-correlation function is defined as a product of values of two signal segments. In this case, during calculation, the value of the signal from CH1 at the moment t1 is multiplied by the value of the signal of CH2 at the moment t1. An obtained value of a converged signal at the moment t1 may be represented as S1×S2. For ease of description, a target distance used to determine the first detection unit group is referred to as a first target distance, a characteristic signal used to determine the first target distance is referred to as a first characteristic signal, and the first characteristic signal is a characteristic signal in the first converged signal. The first time period may be determined by the laser radar based on time information of the first characteristic signal, and a moment indicated (or represented) by the time information of the first characteristic signal is within the first time period. Optionally, a length of the first time period is a preset time length or a time length determined according to a corresponding rule.

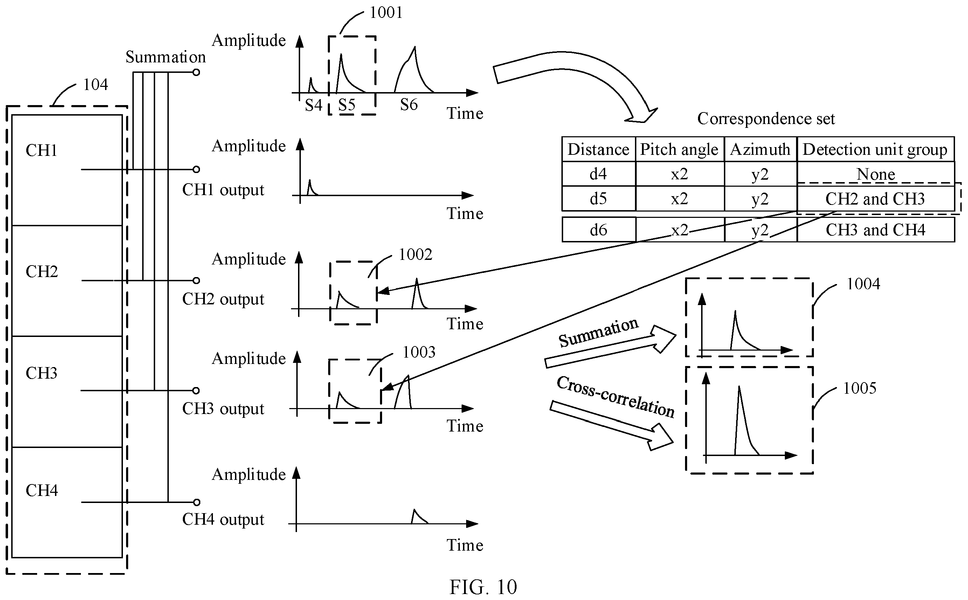

For example, FIG. 10 is a schematic diagram of another possible electrical signal from a detection unit according to an embodiment of this application. The array detector 104 includes four detection units: CH1, CH2, CH3, and CH4. When a laser pulse is transmitted, the current laser pulse is reflected to a detection area at an angle [x2, y2] (namely, an angle indicated by a pitch angle x2 and an azimuth angle y2). The four detection units respectively output four electrical signals; and the laser radar converges the four electrical signals to obtain a first converged electrical signal. That a characteristic signal is a peak signal is used as an example. The first converged electrical signal includes three characteristic signals: a characteristic signal S4, a characteristic signal S5, and a characteristic signal S6. If a moment corresponding to a peak value of a characteristic signal is used as time information of the characteristic signal, the laser radar may determine three target distances based on time information of the three characteristic signals. For example, the signal S5 in an area 1001 may be used to determine a distance d5. A corresponding detection unit group may be determined based on d5 and the angle (x2, y2) that corresponds to the current pulse. The detection unit group includes two detection units (namely, CH2 and CH3). The laser radar determines a first time period that has a preset time length and that includes a moment corresponding to the characteristic signal S5. For example, the preset time length is 100 ns. The laser radar obtains a sub-signal that is in the first time period and that is of an electrical signal output by CH2. For the sub-signal, refer to an electrical signal in an area 1002. Similarly, the laser radar obtains a sub-signal that is in the first time period and that is of an electrical signal output by CH3. For the sub-signal, refer to an electrical signal in an area 1003. The laser radar performs summation or cross-correlation processing on the two sub-signals to obtain a first electrical signal. For example, the laser radar performs summation on the two sub-signals to obtain a signal 1004. For another example, the laser radar performs cross-correlation on the two sub-signals to obtain a signal 1005. Then, the laser radar determines at least one piece of echo information in a detection area based on the first electrical signal (the signal 1004 or the signal 1005).

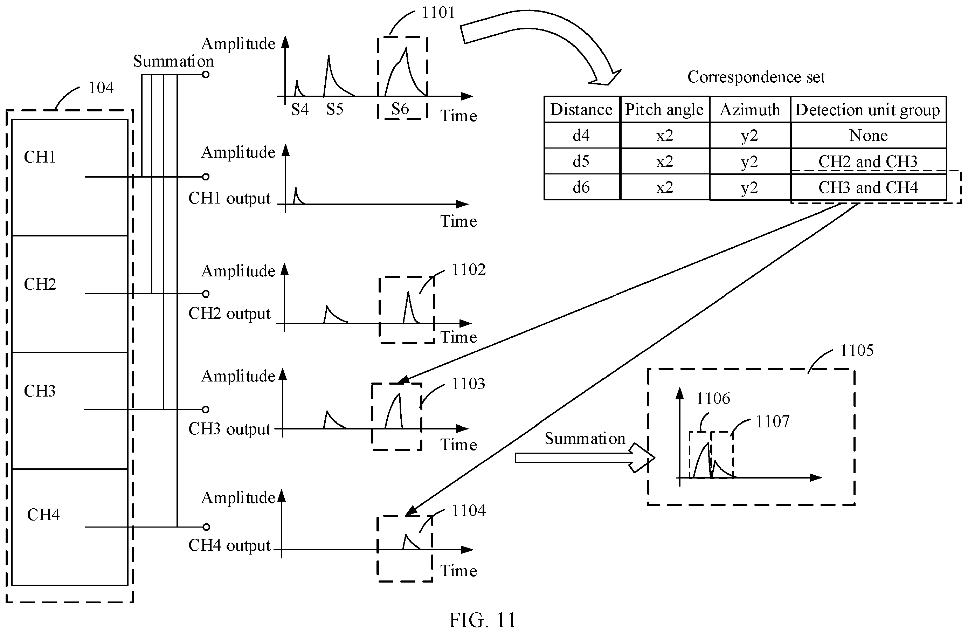

For another example, FIG. 11 is a schematic diagram of a possible electrical signal from a detection unit according to an embodiment of this application. The array detector 104 includes four detection units: CH1, CH2, CH3, and CH4. A signal S6 in an area 1101 may be used to determine a distance d6. It may be determined, based on d6 and an angle (x2, y2), that a corresponding detection unit group includes two detection units (namely, CH3 and CH4). The laser radar determines a first time period that has a preset time length and that includes a moment corresponding to the characteristic signal S6. For example, the preset time length is 100 ns. The laser radar obtains a sub-signal that is in the first time period and that is of an electrical signal output by CH3 (refer to an electrical signal in an area 1103). Similarly, the laser radar obtains a sub-signal that is in the first time period and that is of an electrical signal output by CH4 (refer to an electrical signal in an area 1104). The laser radar performs summation or cross-correlation processing on the two sub-signals to obtain a first electrical signal (refer to a signal in an area 1105). Due to interference of a signal in an area 1102, the determined first electrical signal includes two waveform signal segments. For the two waveform signal segments, refer to an electrical signal in an area 1106 and an electrical signal in an area 1107. In this case, the laser radar may use the first electrical signal to determine two pieces of echo information (a signal corresponding to one of the waveform signal segments is used to determine one echo signal), or use the two waveform signal segments in the first electrical signal to jointly determine one piece of echo information.

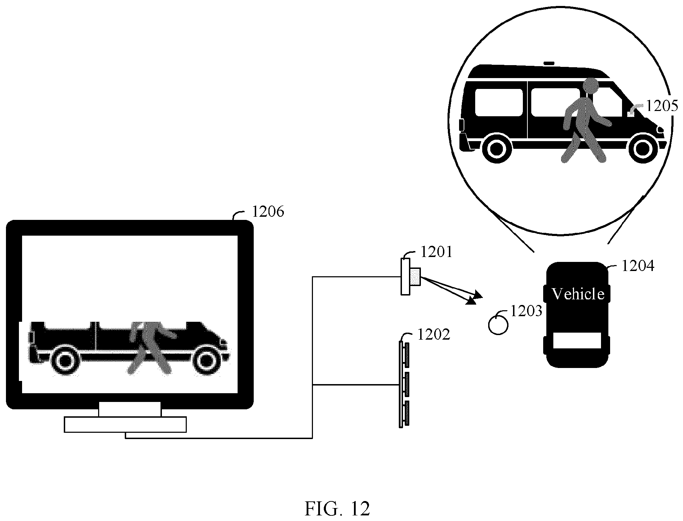

Optionally, the echo information in the detection area may be used to represent reflection intensity and/or a distance of the detection area. Reflection intensity information may be used to determine a material and other information of the detection area, distance information may be used to determine a location of the detection area relative to the laser radar, and both the reflection intensity and the distance may be used for radar imaging. For example, an information processing device reports the echo information to an imaging module, so that the imaging module selects one or more pieces of echo information as a detection result of the detection area corresponding to the angle. The imaging module may form an image of an object field of view through detection performed for a plurality of times at a plurality of angles. FIG. 12 is a schematic diagram of a radar imaging scenario according to an embodiment of this application. A transmit end 1201 may include a laser transmitter and a scanning-type reflection module. The laser transmitter of the transmit end 1201 transmits a laser pulse beam. The laser pulse beam is reflected to a detection area by the scanning-type reflection module. For example, an area 1205 is a detection area corresponding to a scanning angle used in current detection. After the detection area 1205 receives the laser light, a reflection phenomenon occurs, and a part of a returned optical signal is irradiated to an array detector 1202 after passing through a receiving lens. Correspondingly, a detection unit in the array detector 1102 converts the optical signal into an electrical signal, and performs corresponding processing on the electrical signal to obtain at least one piece of echo information. The at least one piece of echo information is transmitted to an imaging module 1206; and the imaging module 1206 selects some or all pieces of the echo information (for example, echo information that is received first or echo information with strongest signal intensity) to perform imaging on the detection area corresponding to current detection. The laser radar transmits a plurality of pulse laser signals, and performs scanning on a plurality of detection areas in an object field of view at a plurality of scanning angles to form an image of the object field of view.

In an optional solution, after receiving an optical signal and outputting an electrical signal, the array detector in the radar system sends, to another device, the electrical signal output by a detection unit. After obtaining the electrical signal, the corresponding another device performs processing such as some or all of step S201 to step S205 on the electrical signal to obtain at least one piece of echo information in the detection area.

In the method described in FIG. 2, the laser radar estimates a preliminary target distance based on a signal obtained through convergence of signals output by detection units, and can screen out an irrelevant signal from a detection unit based on scanning angle information to determine a detection unit related to current detection; and then selects a signal output by the detection unit related to the current detection, to determine information in the detection area. In this way, interference of an irrelevant signal is reduced, effectiveness of a received signal is improved, and a signal-to-noise ratio of the received signal is increased.

The foregoing describes in detail the method in the embodiments of this application. The following provides an apparatus in the embodiments of this application.

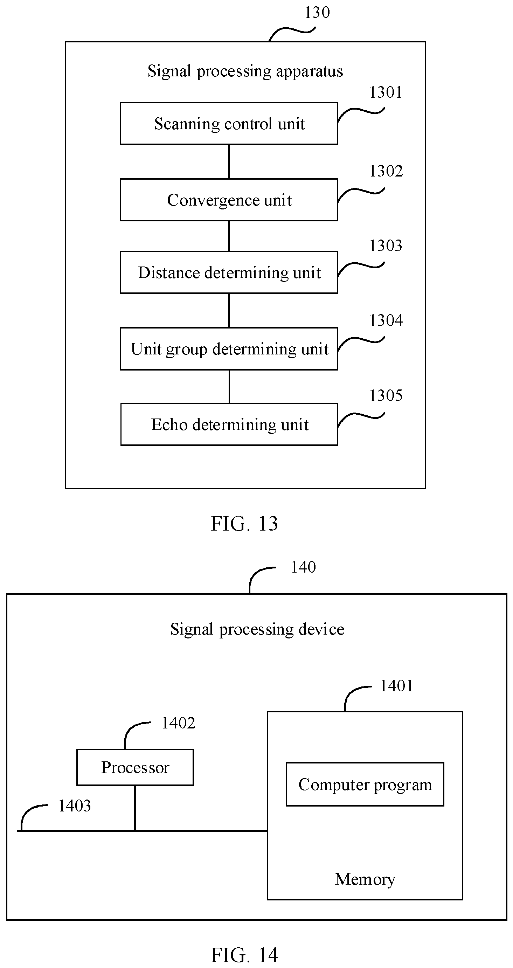

FIG. 13 is a schematic diagram of a structure of a signal processing apparatus 130 according to an embodiment of this application. The signal processing apparatus 130 may be the laser radar or a component integrated into the laser radar, for example, a chip or an integrated circuit. The signal processing apparatus may include a scanning control unit 1301, a convergence unit 1302, a distance determining unit 1303, a unit group determining unit 1304, and an echo determining unit 1305. Descriptions of the units are as follows.

The scanning control unit 1301 is configured to reflect a first laser light to a detection area at a first angle by using a scanning-type reflection module.

The convergence unit 1302 is configured to determine a first converged electrical signal based on at least two electrical signals from at least two detection units, where the first converged electrical signal includes at least one characteristic signal.

The distance determining unit 1303 is configured to determine, based on time information of the at least one characteristic signal, at least one target distance corresponding to the detection area, where the at least one characteristic signal corresponds to the at least one target distance.

The unit group determining unit 1304 is configured to determine at least one detection unit group based on the at least one target distance and the first angle, where a detection unit included in each of the at least one detection unit group belongs to the at least two detection units.

The echo determining unit 1305 is configured to determine at least one piece of echo information in the detection area based on a first electrical signal obtained based on at least one electrical signal from a first detection unit group in the at least one detection unit group.

In this embodiment of this application, a signal processing apparatus estimates a preliminary target distance based on a signal obtained through convergence of signals output by detection units, and determines, based on a scanning angle, a detection unit related to current detection to select a signal output by the detection unit related to the current detection, to determine echo information in the detection area. In this way, interference of an irrelevant signal is reduced, effectiveness of a received signal is improved, and a signal-to-noise ratio of the received signal is increased.

It should be noted herein that division of the foregoing plurality of units is merely logical division based on functions, and is not intended to limit a specific structure of the signal processing apparatus. In specific implementation, some functional modules may be subdivided into more fine functional modules, and some functional modules may be combined into one functional module. However, regardless of whether the functional modules are subdivided or combined, general procedures performed by the signal processing apparatus in the signal processing process are the same. For example, the foregoing plurality of units may also be simplified as a reflection unit and a processing unit. The reflection unit is configured to implement a function of the scanning control unit 1301, and the processing unit is configured to implement a function of one or more of the convergence unit 1302, the distance determining unit 1303, the unit group determining unit 1304, and the echo determining unit 1305. Usually, each unit corresponds to respective program code (or a program instruction). When the program code corresponding to the unit is run on a processor, the unit executes a corresponding procedure to implement a corresponding function. In a possible implementation, each detection unit is one photoelectric conversion microcomponent or a set of photoelectric conversion microcomponents. Because a signal value of one photoelectric conversion microcomponent is easily saturated, an electrical signal using one photoelectric conversion microcomponent cannot accurately represent reflection intensity information in the detection area. In this embodiment of this application, when the first detection unit includes a plurality of photoelectric conversion microcomponents, signals output by the conversion microcomponents in one detection unit may be converged, and then a converged signal is output, to avoid oversaturation of a finally output electrical signal. Therefore, echo information that is in the detection area and that is subsequently determined based on the electrical signal is more accurate, and it is easier to determine the reflection intensity information in the detection area.

In still another possible implementation, the characteristic signal includes a peak signal, a front-edge signal, or a waveform centroid signal of the first converged electrical signal, and the time information is used to indicate a receiving moment of the characteristic signal.

It can be learned that the characteristic signal in the first converged electrical signal can reflect that a relatively strong optical signal appears. However, in a laser radar detection process, a relatively strong optical signal is usually transmitted by a laser radar. Therefore, when the characteristic signal appears, it is highly probable that a laser radar signal is received. Therefore, echo information in laser radar detection can be obtained more accurately based on the characteristic signal.

In still another possible implementation, the at least one characteristic signal includes a first characteristic signal, the first characteristic signal is used to determine a first target distance, and the first target distance is used to determine the first detection unit group; and in the aspect of determining echo information in the detection area based on a first electrical signal obtained based on at least one electrical signal from a first detection unit group in the at least one detection unit group, the echo determining unit 1305 is specifically configured to:

determine a first time period based on time information of the first characteristic signal, where a receiving moment of the first characteristic signal is within the first time period;
obtain an electrical sub-signal that is in the first time period and that is of one electrical signal from the first detection unit group, to obtain the first electrical signal, where the first detection unit group is one of the at least one detection unit group; and
determine at least one piece of echo information in the detection area based on the first electrical signal.

It can be learned that, because the first characteristic signal can quite probably reflect that a laser signal is received, the first time period is a time period in which the laser signal is quite probably received. In addition, because the first detection unit group is a truly relevant detection unit group obtained by screening, the first electrical signal obtained based on the sub-signal that is in the first time period and that is of the signal output by the first detection unit group can more accurately reflect a receiving status of the laser signal. Therefore, the echo information obtained based on the first electrical signal is more accurate. In addition, the electrical sub-signal is used as a basic processing unit. This facilitates decoupling processing of characteristic signals in the entire electrical signal that are generated in different time periods.

In still another possible implementation, the at least one characteristic signal includes a first characteristic signal, the first characteristic signal is used to determine a first target distance, and the first target distance is used to determine the first detection unit group; and in the aspect of determining echo information in the detection area based on a first electrical signal obtained based on at least one electrical signal from a first detection unit group in the at least one detection unit group, the echo determining unit 1305 is specifically configured to:

determine a first time period based on time information of the first characteristic signal, where a time indicated by the time information of the first characteristic signal is within the first time period; and
obtain signals that are in the first time period and that are in a plurality of electrical signals from the first detection unit group to obtain a plurality of electrical sub-signals, where the first detection unit group is one of the at least one detection unit group, and the first electrical signal obtained by converging the plurality of electrical sub-signals is used to determine the at least one piece of echo information in the detection area.

It can be learned that, because the first characteristic signal can quite probably reflect that a laser signal is received, the first time period is a time period in which the laser signal is quite probably received. In addition, because the first detection unit group is a truly relevant detection unit group obtained by screening, the electrical signals that are in the first time period and that are in the signals output by the first detection unit group can more accurately reflect a receiving status of the laser signal. Therefore, the plurality of electrical sub-signals (or may be referred to as local signals) of the electrical signals from the plurality of detection unit groups are obtained, and the plurality of electrical sub-signals are converged to obtain the first electrical signal, so that echo information obtained based on the first electrical signal is more accurate. The first electrical signal may be obtained by converging the plurality of electrical sub-signals by using a summation method or a cross-correlation method. In addition, the electrical sub-signal is used as a basic processing unit. This facilitates decoupling processing of characteristic signals in the entire electrical signal that are generated in different time periods.

In still another possible implementation, in the aspect of determining at least one detection unit group based on the at least one target distance and the first angle, the unit group determining unit 1304 is specifically configured to: determine, based on a first correspondence set, a detection unit group corresponding to the at least one target distance and the first angle, where there is a predefined correspondence between the at least one target distance, the first angle, and the detection unit.

It can be learned that, a prestored correspondence may be used to determine a detection unit group corresponding to a target distance and an angle, thereby reducing real-time calculation burden and improving data processing efficiency. In still another possible implementation, the at least one piece of echo information in the detection area is used to represent at least one of reflection intensity or a distance of the detection area.

In still another possible implementation, the apparatus 130 may further include a receiving lens, an array detector including the at least two detection units, and a diffusion device. The diffusion device is disposed between the receiving lens and the array detector, and is configured to diffuse an optical signal passing through the receiving lens. It can be learned that, the received optical signal is diffused by using the diffusion device, so that a signal that is supposed to be concentrated on one photoelectric conversion microcomponent can be dispersed to a surrounding photoelectric conversion microcomponent. In this way, oversaturation of a signal from a microcomponent in the array detector can be avoided. This is helpful to determine intensity information of an echo signal more accurately.

It should be noted that for implementation of each unit, correspondingly refer to the corresponding descriptions in the method embodiment shown in FIG. 2.

The signal processing apparatus 130 described in FIG. 13 estimates a preliminary target distance based on a signal obtained through convergence of signals output by detection units, and determines, based on a scanning angle, a detection unit related to current detection to select a signal output by the detection unit related to the current detection, to determine echo information in the detection area. In this way, interference of an irrelevant signal is reduced, effectiveness of a received signal is improved, and a signal-to-noise ratio of the received signal is increased.

FIG. 14 is a schematic diagram of a structure of a signal processing device 140 according to an embodiment of this application. The signal processing device 140 may be the laser radar or a component integrated into the laser radar, for example, a chip or an integrated circuit. The signal processing apparatus may include a memory 1401, a processor 1402, and a bus 1403. The memory 1401 and the processor 1402 are connected through the bus 1403.

The memory 1401 is configured to provide storage space, and the storage space may store data such as an operating system and a computer program. The memory 1401 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM).

The processor 1402 is a module that performs an arithmetic operation and a logical operation, and may be one or a combination of processing modules such as a central processing unit (central processing unit, CPU), a graphics processing unit (graphics processing unit, GPU), or a microprocessor unit (microprocessor unit, MPU).

The memory 1401 stores a computer program, and the processor 1402 invokes the computer program stored in the memory 1401, to perform the following operations:

reflecting first laser light to a detection area at a first angle by using a scanning-type reflection module;
determining a first converged electrical signal based on at least two electrical signals from at least two detection units, where the first converged electrical signal includes at least one characteristic signal;
determining, based on time information of the at least one characteristic signal, at least one target distance corresponding to the detection area, where the at least one characteristic signal corresponds to the at least one target distance;
determining at least one detection unit group based on the at least one target distance and the first angle, where a detection unit included in each of the at least one detection unit group belongs to the at least two detection units; and
determining at least one piece of echo information in the detection area based on a first electrical signal obtained based on at least one electrical signal from a first detection unit group in the at least one detection unit group. In this embodiment of this application, the signal processing device 140 estimates a preliminary target distance based on a signal obtained through convergence of signals output by detection units, and determines, based on a scanning angle, a detection unit related to current detection to select a signal output by the detection unit related to the current detection, to determine echo information in the detection area. In this way, interference of an irrelevant signal is reduced, effectiveness of a received signal is improved, and a signal-to-noise ratio of the received signal is increased. In a possible implementation, each detection unit is one photoelectric conversion microcomponent or a set of photoelectric conversion microcomponents.

Because a signal value of one photoelectric conversion microcomponent is easily saturated, an electrical signal using one photoelectric conversion microcomponent cannot accurately represent reflection intensity information in the detection area. In this embodiment of this application, when the first detection unit includes a plurality of photoelectric conversion microcomponents, signals output by the conversion microcomponents in one detection unit may be converged, and then a converged signal is output, to avoid oversaturation of a finally output electrical signal. Therefore, echo information that is in the detection area and that is subsequently determined based on the electrical signal is more accurate, and it is easier to determine the reflection intensity information in the detection area.

In still another possible implementation, the characteristic signal includes a peak signal, a front-edge signal, or a waveform centroid signal of the first converged electrical signal, and the time information is used to indicate a receiving moment of the characteristic signal.

It can be learned that the characteristic signal in the first converged electrical signal can reflect that a relatively strong optical signal appears. However, in a laser radar detection process, a relatively strong optical signal is usually transmitted by a laser radar. Therefore, when the characteristic signal appears, it is highly probable that a laser radar signal is received. Therefore, echo information in laser radar detection can be obtained more accurately based on the characteristic signal.

In still another possible implementation, the at least one characteristic signal includes a first characteristic signal, the first characteristic signal is used to determine a first target distance, and the first target distance is used to determine the first detection unit group; and in the aspect of determining echo information in the detection area based on a first electrical signal obtained based on at least one electrical signal from a first detection unit group in the at least one detection unit group, the processor 1402 is specifically configured to:

determine a first time period based on time information of the first characteristic signal, where a receiving moment of the first characteristic signal is within the first time period;
obtain an electrical sub-signal that is in the first time period and that is of one electrical signal from the first detection unit group, to obtain the first electrical signal, where the first detection unit group is one of the at least one detection unit group; and
determine at least one piece of echo information in the detection area based on the first electrical signal. It can be learned that, because the first characteristic signal can quite probably reflect that a laser signal is received, the first time period is a time period in which the laser signal is quite probably received. In addition, because the first detection unit group is a truly relevant detection unit group obtained by screening, the first electrical signal obtained based on the sub-signal that is in the first time period and that is of the signal output by the first detection unit group can more accurately reflect a receiving status of the laser signal. Therefore, the echo information obtained based on the first electrical signal is more accurate. In addition, the electrical sub-signal is used as a basic processing unit. This facilitates decoupling processing of characteristic signals in the entire electrical signal that are generated in different time periods.

In still another possible implementation, the at least one characteristic signal includes a first characteristic signal, the first characteristic signal is used to determine a first target distance, and the first target distance is used to determine the first detection unit group; and in the aspect of determining echo information in the detection area based on a first electrical signal obtained based on at least one electrical signal from a first detection unit group in the at least one detection unit group, the processor 1402 is specifically configured to:

determine a first time period based on time information of the first characteristic signal, where a receiving moment of the first characteristic signal is within the first time period;
obtain signals that are in the first time period and that are in a plurality of electrical signals from the first detection unit group to obtain a plurality of electrical sub-signals, where the first detection unit group is one of the at least one detection unit group, and the first electrical signal obtained by converging the plurality of electrical sub-signals is used to determine the at least one piece of echo information in the detection area.

It can be learned that, because the first characteristic signal can quite probably reflect that a laser signal is received, the first time period is a time period in which the laser signal is quite probably received. In addition, because the first detection unit group is a truly relevant detection unit group obtained by screening, the electrical signals that are in the first time period and that are in the signals output by the first detection unit group can more accurately reflect a receiving status of the laser signal. Therefore, the plurality of electrical sub-signals (or may be referred to as local signals) of the electrical signals from the plurality of detection unit groups are obtained, and the plurality of electrical sub-signals are converged to obtain the first electrical signal, so that echo information obtained based on the first electrical signal is more accurate. The first electrical signal may be obtained by converging the plurality of electrical sub-signals by using a summation method or a cross-correlation method. In addition, the electrical sub-signal is used as a basic processing unit. This facilitates decoupling processing of characteristic signals in the entire electrical signal that are generated in different time periods.

In still another possible implementation, in the aspect of determining the at least one detection unit group based on the at least one target distance and the first angle, the processor 1402 is specifically configured to:
determine, based on a first correspondence set, a detection unit group corresponding to the at least one target distance and the first angle, where there is a predefined correspondence between the at least one target distance, the first angle, and the detection unit.

It can be learned that, a prestored correspondence may be used to determine a detection unit group corresponding to a target distance and an angle, thereby reducing real-time calculation burden and improving data processing efficiency. In still another possible implementation of the first aspect, the at least one piece of echo information in the detection area is used to represent at least one of reflection intensity or a distance of the detection area.

In still another possible implementation, the signal processing device may further be externally connected to components such as a scanning-type reflection module, a receiving lens, an array detector including the at least two detection units, and a diffusion device. The diffusion device is disposed between the receiving lens and the array detector, and is configured to diffuse an optical signal passing through the receiving lens.

It can be learned that, the received optical signal is diffused by using the diffusion device, so that a signal that is supposed to be concentrated on one photoelectric conversion microcomponent can be dispersed to a surrounding photoelectric conversion microcomponent. In this way, oversaturation of a signal from a microcomponent in the array detector can be avoided. This is helpful to determine intensity information of an echo signal more accurately.

It should be noted that, for specific implementation of each signal processing device, further correspondingly refer to the corresponding descriptions of the method embodiment shown in FIG. 2.

The signal processing device 140 described in FIG. 14 may estimate a preliminary target distance based on a signal obtained through convergence of signals output by detection units, and determine, based on a scanning angle, a detection unit related to current detection to select a signal output by the detection unit related to the current detection, to determine echo information in the detection area. In this way, interference of an irrelevant signal is reduced, effectiveness of a received signal is improved, and a signal-to-noise ratio of the received signal is increased.

An embodiment of this application further provides a computer-readable storage medium. The computer-readable storage medium stores a computer program. When the computer program runs on one or more processors, the signal processing method shown in FIG. 2 can be implemented.

An embodiment of this application further provides a computer program product. When the computer program product runs on a processor, the signal processing method shown in FIG. 2 can be implemented.

An embodiment of this application further provides a sensor system. The sensor system includes at least one sensor.

The sensor may include at least one laser radar. The laser radar may include the signal processing apparatus shown in FIG. 13, or the signal processing device shown in FIG. 14, or the laser radar is the laser radar 10 shown in FIG. 1. Further, optionally, the sensor system may further include at least one of the following: at least one camera, at least one millimeter-wave radar, at least one ultrasonic radar, and at least one infrared sensor.

An embodiment of this application further provides a vehicle, and the vehicle may include the foregoing sensor system. An embodiment of the present invention further provides a chip system. The chip system includes at least one processor, a memory, and an interface circuit. The interface circuit is configured to connect an external device (such as a laser transmitter, a scanning-type reflection module, or an array detector) to the processor. The memory stores a computer program. When the computer program is executed by the processor, the method process shown in FIG. 2 is implemented. Further, the memory, the interface circuit, and the at least one processor may be interconnected by using a line.

An embodiment of this application further provides a terminal. The terminal includes the laser radar shown in FIG. 1, or the terminal includes the signal processing device shown in FIG. 14. Optionally, the terminal may be a mobile terminal or a transportation tool that needs to perform target detection, such as a vehicle, an uncrewed aerial vehicle, a train, or a robot.

In conclusion, by implementing the embodiments of this application, a preliminary target distance can be estimated based on the signal obtained through convergence of the signals output by the detection units, and a detection unit related to current detection can be deduced based on scanning angle information. Signals of irrelevant detection units can be accurately screened out, so that a signal output by the detection units related to current detection is selected to determine information in the detection area. In this way, interference of the irrelevant signal is reduced, and effectiveness of a received signal is improved.

A person of ordinary skill in the art may understand that all or some of the processes of the methods in the foregoing embodiments may be implemented by a computer program instructing related hardware. The computer program may be stored in a computer-readable storage medium. When the computer program is run, the processes in the foregoing method embodiments are performed. The foregoing storage medium includes: any medium that can store computer program code, such as a ROM, a random access memory RAM, a magnetic disk, or an optical disc.

**Claims**

1. A signal processing method, comprising:

    reflecting (S201) first laser light to a detection area at a first angle ($\theta_x$') by using a scanning-type reflection module (102);
    determining (S202) a first converged electrical signal based on at least two electrical signals from at least two detection units (403), wherein the first converged electrical signal comprises at least one characteristic signal;
    determining (S203), based on time information of the at least one characteristic signal, at least one target distance corresponding to the detection area, wherein the at least one characteristic signal corresponds to the at least one target distance;
    determining (S204) at least one detection unit group based on the at least one target distance and the first angle ($\theta_x$'), wherein a detection unit (403) comprised in each of the at least one detection unit group belongs to the at least two detection units (403); and
    determining (S205) at least one piece of echo information in the detection area based on a first electrical signal obtained based on at least one electrical signal from a first detection unit group in the at least one detection unit group,
    wherein the at least one characteristic signal comprises a first characteristic signal, the first characteristic signal is used to determine a first target distance, and the first target distance is used to determine the first detection unit group; and the determining the echo information in the detection area based on the first electrical signal obtained based on the at least one electrical signal from the first detection unit group in the at least one detection unit group comprises:

        either determining a first time period based on time information of the first characteristic signal, wherein a receiving moment of the first characteristic signal is within the first time period; and
        obtaining an electrical sub-signal that is in the first time period and that is of one electrical signal from the first detection unit group, to obtain the first electrical signal, wherein the first detection unit group is one of the at least one detection unit group; and
        determining the at least one piece of echo information in the detection area based on the first electrical signal, or determining a first time period based on time information of the first characteristic signal, wherein a receiving moment of the first characteristic signal is within the first time period; and
        obtaining signals that are in the first time period and that are in a plurality of electrical signals from the first detection unit group to obtain a plurality of electrical sub-signals, wherein the first detection unit group is one of the at least one detection unit group, and the first electrical signal obtained by converging the plurality of electrical sub-signals is used to determine the at least one piece of echo information in the detection area.

2. The method according to claim 1, wherein each detection unit (403) is one photoelectric conversion microcomponent (301, 302, 303, 304) or a set of photoelectric conversion microcomponents (301, 302, 303, 304).

3. The method according to claim 1 or 2, wherein the characteristic signal comprises a peak signal, a front-edge signal, or a waveform centroid signal of the first converged electrical signal; and the time information is used to indicate a receiving moment of the characteristic signal.

4. The method according to any one of claims 1 to 3, wherein the determining the echo information in the detection area based on the first electrical signal obtained based on the at least one electrical signal from the first detection unit group in the at least one detection unit group comprises:

    determining the first time period based on the time information of the first characteristic signal, wherein the receiving moment of the first characteristic signal is within the first time period;
    obtaining the electrical sub-signal that is in the first time period and that is of the one electrical signal from the first detection unit group, to obtain the first electrical signal, wherein the first detection unit group is the one of the at least one detection unit group; and
    determining the at least one piece of the echo information in the detection area based on the first electrical signal.

5. The method according to any one of claims 1 to 3, wherein the determining the echo information in the detection area based on the first electrical signal obtained based on the at least one electrical signal from the first detection unit group in the at least one detection unit group comprises:

determining the first time period based on the time information of the first characteristic signal, wherein the receiving moment of the first characteristic signal is within the first time period; and

obtaining the signals that are in the first time period and that are in the plurality of electrical signals from the first detection unit group to obtain the plurality of the electrical sub-signals, wherein the first detection unit group is the one of the at least one detection unit group, and the first electrical signal obtained by converging the plurality of the electrical sub-signals is used to determine the at least one piece of the echo information in the detection area.

6. The method according to any one of claims 1 to 5, wherein the determining at least one detection unit group based on the at least one target distance and the first angle ($\theta_x$') comprises:

determining, based on a first correspondence set, a detection unit group corresponding to the at least one target distance and the first angle ($\theta_x$').

7. The method according to any one of claims 1 to 6, wherein the at least one piece of echo information in the detection area is used to represent at least one of reflection intensity or a distance of the detection area.

8. The method according to any one of claims 1 to 7, wherein the method is applied to a laser radar (10); the laser radar (10) comprises the scanning-type reflection module (102), a receiving lens (103), an array detector (104, 1202) comprising the at least two detection units (403), and a diffusion device, and the diffusion device is disposed between the receiving lens (103) and the array detector (104, 1202), and is configured to diffuse an optical signal passing through the receiving lens (103).

9. A signal processing apparatus (130), wherein the apparatus (130) comprises:

a scanning control unit (1301), configured to reflect first laser light to a detection area at a first angle ($\theta_x$') by using a scanning-type reflection module (102);

a convergence unit (1302), configured to determine a first converged electrical signal based on at least two electrical signals from at least two detection units (403), wherein the first converged electrical signal comprises at least one characteristic signal;

a distance determining unit (1303), configured to determine, based on time information of the at least one characteristic signal, at least one target distance corresponding to the detection area, wherein the at least one characteristic signal corresponds to the at least one target distance;

a unit group determining unit (1304), configured to determine at least one detection unit group based on the at least one target distance and the first angle ($\theta_x$'), wherein a detection unit (403) comprised in each of the at least one detection unit group belongs to the at least two detection units (403); and

an echo determining unit (1305), configured to determine at least one piece of echo information in the detection area based on a first electrical signal obtained based on at least one electrical signal from a first detection unit group in the at least one detection unit group,

wherein the at least one characteristic signal comprises a first characteristic signal, the first characteristic signal is used to determine a first target distance, and the first target distance is used to determine the first detection unit group; and in the aspect of determining echo information in the detection area based on the first electrical signal obtained based on the at least one electrical signal from the first detection unit group in the at least one detection unit group, the echo determining unit (1305) is configured to:

either determine a first time period based on time information of the first characteristic signal, wherein a receiving moment of the first characteristic signal is within the first time period; and

obtain an electrical sub-signal that is in the first time period and that is of one electrical signal from the first detection unit group, to obtain the first electrical signal, wherein the first detection unit group is one of the at least one detection unit group; and

determine the at least one piece of echo information in the detection area based on the first electrical signal, or determine a first time period based on time information of the first characteristic signal, wherein a receiving moment of the first characteristic signal is within the first time period; and

obtain signals that are in the first time period and that are in a plurality of electrical signals from the first detection unit group to obtain a plurality of electrical sub-signals, wherein the first detection unit group is one of the at least one detection unit group, and the first electrical signal obtained by converging the plurality of electrical sub-signals is used to determine the at least one piece of echo information in the detection area.

10. The apparatus (130) according to claim 9, wherein each detection unit (403) is one photoelectric conversion microcomponent (301, 302, 303, 304) or a set of photoelectric conversion microcomponents (301, 302, 303, 304).

11. The apparatus (130) according to claim 9 or 10, wherein the characteristic signal comprises a peak signal, a front-edge signal, or a waveform centroid signal of the first converged electrical signal; and the time information is used to indicate a receiving moment of the characteristic signal.

12. A laser radar (10), wherein the laser radar (10) comprises a laser transmitter (101, 1201), a scanning-type reflection module (102), an array detector (104, 1202), a memory (107, 1401), and a processor (106, 1402), the laser transmitter (101, 1201) is configured to transmit first laser light, the array detector (104, 1202) comprises at least two detection units (403), the memory (107, 1401) stores a calculator program, and the processor (106, 1402) invokes the computer program stored in the memory (107, 1401), to perform the following operations:

reflecting the first laser light to a detection area at a first angle ($\theta_x$') by using a scanning-type reflection module (102);
determining a first converged electrical signal based on at least two electrical signals from at least two detection units (403), wherein the first converged electrical signal comprises at least one characteristic signal;
determining, based on time information of the at least one characteristic signal, at least one target distance corresponding to the detection area, wherein the at least one characteristic signal corresponds to the at least one target distance;
determining at least one detection unit group based on the at least one target distance and the first angle ($\theta_x$'), wherein a detection unit (403) comprised in each of the at least one detection unit group belongs to the at least two detection units (403); and
determining at least one piece of echo information in the detection area based on a first electrical signal obtained based on at least one electrical signal from a first detection unit group in the at least one detection unit group, wherein the at least one characteristic signal comprises a first characteristic signal, the first characteristic signal is used to determine a first target distance, and the first target distance is used to determine the first detection unit group; and the determining the echo information in the detection area based on the first electrical signal obtained based on the at least one electrical signal from the first detection unit group in the at least one detection unit group comprises:

either determining a first time period based on time information of the first characteristic signal, wherein a receiving moment of the first characteristic signal is within the first time period; and
obtaining an electrical sub-signal that is in the first time period and that is of one electrical signal from the first detection unit group, to obtain the first electrical signal, wherein the first detection unit group is one of the at least one detection unit group; and
determining the at least one piece of echo information in the detection area based on the first electrical signal, or determining a first time period based on time information of the first characteristic signal, wherein a receiving moment of the first characteristic signal is within the first time period; and
obtaining signals that are in the first time period and that are in a plurality of electrical signals from the first detection unit group to obtain a plurality of electrical sub-signals, wherein the first detection unit group is one of the at least one detection unit group, and the first electrical signal obtained by converging the plurality of electrical sub-signals is used to determine the at least one piece of echo information in the detection area.

13. A terminal, wherein the terminal comprises the laser radar (10) according to any one of claims 9 to 11.

14. The terminal according to claim 13 which is a vehicle.

**Patentansprüche**

1. Signalverarbeitungsverfahren, Folgendes umfassend:

Reflektieren (S201) eines ersten Laserlichts auf einen Erfassungsbereich unter einem ersten Winkel ($\theta_x$') unter Verwendung eines Reflexionsmoduls (102) vom Scan-Typ;
Bestimmen (S202) eines ersten konvergierten elektrischen Signals auf Grundlage von mindestens zwei elektrischen Signalen von mindestens zwei Erfassungseinheiten (403), wobei das erste konvergierte elektrische Signal mindestens ein charakteristisches Signal umfasst;
Bestimmen (S203) mindestens eines dem Erfassungsbereich entsprechenden Zielabstands auf Grundlage der Zeitinformationen des mindestens einen charakteristischen Signals, wobei das mindestens eine charakteristische Signal dem mindestens einen Zielabstand entspricht;

Bestimmen (S204) mindestens einer Erfassungseinheitsgruppe auf Grundlage des mindestens einen Zielabstands und des ersten Winkels ($\theta_x$'), wobei eine Erfassungseinheit (403), die in jeder der mindestens einen Erfassungseinheitsgruppe enthalten ist, zu den mindestens zwei Erfassungseinheiten (403) gehört; und
Bestimmen (S205) mindestens einer Echo-Information in dem Erfassungsbereich auf Grundlage eines ersten elektrischen Signals,
das auf Grundlage mindestens eines elektrischen Signals von einer ersten Erfassungseinheitengruppe in der mindestens einen Erfassungseinheitengruppe erlangt wird,
wobei das mindestens eine charakteristische Signal ein erstes charakteristisches Signal umfasst, das erste charakteristische Signal verwendet wird, um einem ersten Zielabstand zu bestimmen,
und der erste Zielabstand verwendet wird, um die erste Erfassungseinheitengruppe zu bestimmen; und das Bestimmen der Echo-Informationen in dem Erfassungsbereich auf Grundlage des ersten elektrischen Signals, das auf Grundlage des mindestens einen elektrischen Signals von der ersten Erfassungseinheitengruppe in der mindestens einen Erfassungseinheitengruppe erlangt wird, Folgendes umfasst:

entweder Bestimmen eines ersten Zeitraums auf Grundlage von Zeitinformationen des ersten charakteristischen Signals, wobei ein Empfangsmoment des ersten charakteristischen Signals innerhalb des ersten Zeitraums liegt; und
Erlangen eines elektrischen Teilsignals, das in dem ersten Zeitraum liegt und das aus einem elektrischen Signal von der ersten Erfassungseinheitsgruppe besteht, um das erste elektrische Signal zu erlangen, wobei die erste Erfassungseinheitsgruppe eine der mindestens einen Erfassungseinheitsgruppe ist; und
Bestimmen der mindestens einen Echo-Information in dem Erfassungsbereich auf Grundlage des ersten elektrischen Signals,
oder Bestimmen eines ersten Zeitraums auf Grundlage von Zeitinformationen des ersten charakteristischen Signals, wobei ein Empfangsmoment des ersten charakteristischen Signals innerhalb des ersten Zeitraums liegt; und
Erlangen von Signalen, die in dem ersten Zeitraum liegen und die in einer Vielzahl von elektrischen Signalen von der ersten Erfassungseinheitsgruppe liegen, um eine Vielzahl von elektrischen Teilsignalen zu erlangen, wobei die erste Erfassungseinheitsgruppe eine der mindestens einen Erfassungseinheitsgruppe ist, und das erste elektrische Signal, das durch Konvergieren der Vielzahl von elektrischen Teilsignalen erlangt wird, verwendet wird, um die mindestens eine Echo-Information in dem Erfassungsbereich zu bestimmen.

2. Verfahren nach Anspruch 1, wobei jede Erfassungseinheit (403) eine photoelektrische Umwandlungsmikrokomponente (301, 302, 303, 304) oder ein Satz von photoelektrischen Umwandlungsmikrokomponenten (301, 302, 303, 304) ist.

3. Verfahren nach Anspruch 1 oder 2, wobei das charakteristische Signal ein Spitzensignal, ein Vorderkanten-Signal oder ein Wellenform-Schwerpunktsignal des ersten konvergierten elektrischen Signals umfasst; und die Zeitinformationen verwendet werden, um einen Empfangszeitpunkt des charakteristischen Signals anzugeben.

4. Verfahren nach einem der Ansprüche 1 bis 3, wobei das Bestimmen der Echo-Informationen in dem Erfassungsbereich auf Grundlage des ersten elektrischen Signals, das auf Grundlage mindestens eines elektrischen Signals von einer ersten Erfassungseinheitengruppe in der mindestens einen Erfassungseinheitengruppe erlangt wird, Folgendes umfasst:

entweder Bestimmen des ersten Zeitraums auf Grundlage der Zeitinformationen des ersten charakteristischen Signals, wobei der Empfangsmoment des ersten charakteristischen Signals innerhalb des ersten Zeitraums liegt;
Erlangen des elektrischen Teilsignals, das in dem ersten Zeitraum liegt und das aus einem elektrischen Signal von der ersten Erfassungseinheitsgruppe besteht, um das erste elektrische Signal zu erlangen, wobei die erste Erfassungseinheitsgruppe die eine der mindestens einen Erfassungseinheitsgruppe ist; und
Bestimmen der mindestens einen von der Echo-Information in dem Erfassungsbereich auf Grundlage des ersten elektrischen Signals.

5. Verfahren nach einem der Ansprüche 1 bis 3, wobei das Bestimmen der Echo-Informationen in dem Erfassungsbereich auf Grundlage des ersten elektrischen Signals, das auf Grundlage mindestens eines elektrischen Signals von einer ersten Erfassungseinheitengruppe in der mindestens einen Erfassungseinheitengruppe erlangt wird, Folgendes umfasst:

Bestimmen des ersten Zeitraums auf Grundlage der Zeitinformationen des ersten charakteristischen Signals, wobei der Empfangsmoment des ersten charakteristischen Signals innerhalb des ersten Zeitraums liegt; und Erlangen der Signale, die in dem ersten Zeitraum liegen und die in der Vielzahl von elektrischen Signalen von der ersten Erfassungseinheitsgruppe liegen, um eine Vielzahl von elektrischen Teilsignalen zu erlangen, wobei die erste Erfassungseinheitsgruppe die eine der mindestens einen Erfassungseinheitsgruppe ist, und das erste elektrische Signal, das durch Konvergieren der Vielzahl von elektrischen Teilsignalen erlangt wird, verwendet wird, um die mindestens eine Echo-Information in dem Erfassungsbereich zu bestimmen.

6. Verfahren nach einem der Ansprüche 1 bis 5, wobei das Bestimmen mindestens einer Erfassungseinheitengruppe auf Grundlage des mindestens einen Zielabstands und des ersten Winkels ($\theta_x$') Folgendes umfasst:
Bestimmen einer Erfassungseinheitsgruppe, die dem mindestens einen Zielabstand und dem ersten Winkel ($\theta_x$') entspricht, basierend auf einem ersten Entsprechungssatz.

7. Verfahren nach einem der Ansprüche 1 bis 6, wobei die mindestens eine Echo-Information in dem Erfassungsbereich verwendet wird, um mindestens entweder die Reflexionsintensität oder die Entfernung des Erfassungsbereichs darzustellen.

8. Verfahren nach einem der Ansprüche 1 bis 7, wobei das Verfahren auf ein Laserradar (10) angewendet wird; das Laserradar (10) das Reflexionsmodul (102) vom Scan-Typ, eine Empfangslinse (103), einen Array-Detektor (104, 1202), der die mindestens zwei Erfassungseinheiten (403) umfasst, und eine Diffusionsvorrichtung umfasst, und wobei die Diffusionsvorrichtung zwischen der Empfangslinse (103) und dem Array-Detektor (104, 1202) angeordnet und dazu konfiguriert ist, ein optisches Signal, das durch die Empfangslinse (103) hindurch tritt, zu streuen.

9. Signalverarbeitungsvorrichtung (130), wobei die Vorrichtung (130) Folgendes umfasst:

eine Scan-Steuereinheit (1301), die dazu konfiguriert ist, erstes Laserlicht zu einem Erfassungsbereich unter einem ersten Winkel ($\theta_x$') unter Verwendung eines Reflexionsmoduls (102) vom Scan-Typ zu reflektieren;
eine Konvergenzeinheit (1302), die dazu konfiguriert ist, ein erstes konvergiertes elektrisches Signal auf Grundlage von mindestens zwei elektrischen Signalen von mindestens zwei Erfassungseinheiten (403) zu bestimmen, wobei das erste konvergierte elektrische Signal mindestens ein charakteristisches Signal umfasst;
eine Abstandsbestimmungseinheit (1303), die dazu konfiguriert ist, mindestens eines dem Erfassungsbereich entsprechenden Zielabstands auf Grundlage der Zeitinformationen des mindestens einen charakteristischen Signals zu bestimmen, wobei das mindestens eine charakteristische Signal dem mindestens einen Zielabstand entspricht;
eine Einheitsgruppenbestimmungseinheit (1304), die dazu konfiguriert ist, mindestens eine Erfassungseinheitsgruppe auf Grundlage des mindestens einen Zielabstands und des ersten Winkels ($\theta_x$') zu bestimmen, wobei eine Erfassungseinheit (403), die in jeder der mindestens einen Erfassungseinheitsgruppe enthalten ist, zu den mindestens zwei Erfassungseinheiten (403) gehört; und
eine Echo-Bestimmungseinheit (1305), die dazu konfiguriert ist, mindestens eine Echo-Information in dem Erfassungsbereich auf Grundlage eines ersten elektrischen Signals zu bestimmen, das auf Grundlage mindestens eines elektrischen Signals von einer ersten Erfassungseinheitengruppe in der mindestens einen Erfassungseinheitengruppe erlangt wird,
wobei das mindestens eine charakteristische Signal ein erstes charakteristisches Signal umfasst, das erste charakteristische Signal verwendet wird, um einen ersten Zielabstand zu bestimmen, und der erste Zielabstand verwendet wird, um die erste Erfassungseinheitengruppe zu bestimmen; und in dem Aspekt des Bestimmens von Echoinformationen in dem Erfassungsbereich auf Grundlage des ersten elektrischen Signals, das auf Grundlage des mindestens einen elektrischen Signals von der ersten Erfassungseinheitengruppe in der mindestens einen Erfassungseinheitengruppe erlangt wurde, die Echobestimmungseinheit (1305) zu Folgendem konfiguriert ist:

entweder Bestimmen eines ersten Zeitraums auf der Grundlage von Zeitinformationen des ersten charakteristischen Signals, wobei ein Empfangsmoment des ersten charakteristischen Signals innerhalb des ersten Zeitraums liegt; und
Erlangen eines elektrischen Teilsignals, das in dem ersten Zeitraum liegt und das aus einem elektrischen Signal von der ersten Erfassungseinheitsgruppe besteht, um das erste elektrische Signal zu erlangen, wobei die erste Erfassungseinheitsgruppe eine der mindestens einen Erfassungseinheitsgruppe ist; und
Bestimmen der mindestens einen Echo-Information in dem Erfassungsbereich auf Grundlage des ersten elektrischen Signals, oder Bestimmen eines ersten Zeitraums auf der Grundlage von Zeitinformationen des ersten charakteristischen Signals, wobei ein Empfangsmoment des ersten charakteristischen Signals innerhalb des ersten Zeitraums liegt; und

Erlangen von Signalen, die in dem ersten Zeitraum liegen und die in einer Vielzahl von elektrischen Signalen von der ersten Erfassungseinheitsgruppe liegen, um eine Vielzahl von elektrischen Teilsignalen zu erlangen, wobei die erste Erfassungseinheitsgruppe eine der mindestens einen Erfassungseinheitsgruppe ist, und das erste elektrische Signal, das durch Konvergieren der Vielzahl von elektrischen Teilsignalen erlangt wird, verwendet wird, um die mindestens eine Echo-Information in dem Erfassungsbereich zu bestimmen.

10. Vorrichtung (130) nach Anspruch 9, wobei jede Erfassungseinheit (403) eine photoelektrische Umwandlungsmikrokomponente (301, 302, 303, 304) oder ein Satz von photoelektrischen Umwandlungsmikrokomponenten (301, 302, 303, 304) ist.

11. Vorrichtung (130) nach Anspruch 9 oder 10, wobei das charakteristische Signal ein Spitzensignal, ein Vorderkanten-Signal oder ein Wellenform-Schwerpunktsignal des ersten konvergierten elektrischen Signals umfasst; und die Zeitinformationen verwendet werden, um einen Empfangszeitpunkt des charakteristischen Signals anzugeben.

12. Laserradar (10), wobei das Laserradar (10) einen Lasersender (101, 1201), ein Reflexionsmodul (102) vom Scan-Typ, einen Array-Detektor (104, 1202), einen Speicher (107, 1401) und einen Prozessor (106, 1402) umfasst, der Lasersender (101, 1201) dazu konfiguriert ist, erstes Laserlicht auszusenden, der Array-Detektor (104, 1202) mindestens zwei Erfassungseinheiten (403) umfasst, der Speicher (107, 1401) ein Computerprogramm speichert und der Prozessor (106, 1402) das in dem Speicher (107, 1401) gespeicherte Computerprogramm aufruft, um die folgenden Operationen durchzuführen:

Reflektieren des ersten Laserlichts auf einen Erfassungsbereich unter einem ersten Winkel ($\theta_x$') unter Verwendung eines Reflexionsmoduls (102) vom Scan-Typ;

Bestimmen eines ersten konvergierten elektrischen Signals auf Grundlage von mindestens zwei elektrischen Signalen von mindestens zwei Erfassungseinheiten (403), wobei das erste konvergierte elektrische Signal mindestens ein charakteristisches Signal umfasst;

Bestimmen mindestens eines dem Erfassungsbereich entsprechenden Zielabstands auf Grundlage der Zeitinformationen des mindestens einen charakteristischen Signals, wobei das mindestens eine charakteristische Signal dem mindestens einen Zielabstand entspricht;

Bestimmen mindestens einer Erfassungseinheitsgruppe auf Grundlage des mindestens einen Zielabstands und des ersten Winkels ($\theta_x$') wobei eine Erfassungseinheit (403), die in jeder der mindestens einen Erfassungseinheitsgruppe enthalten ist, zu den mindestens zwei Erfassungseinheiten (403) gehört; und

Bestimmen mindestens einer Echo-Information in dem Erfassungsbereich auf Grundlage eines ersten elektrischen Signals,

das auf Grundlage mindestens eines elektrischen Signals von einer ersten Erfassungseinheitengruppe in der mindestens einen Erfassungseinheitengruppe erlangt wird,

wobei das mindestens eine charakteristische Signal ein erstes charakteristisches Signal umfasst, das erste charakteristische Signal verwendet wird, um einem ersten Zielabstand zu bestimmen, und der erste Zielabstand verwendet wird, um die erste Erfassungseinheitengruppe zu bestimmen; und das Bestimmen der Echo-Informationen in dem Erfassungsbereich auf Grundlage des ersten elektrischen Signals, das auf Grundlage des mindestens einen elektrischen Signals von der ersten Erfassungseinheitengruppe in der mindestens einen Erfassungseinheitengruppe erlangt wird, Folgendes umfasst:

entweder Bestimmen eines ersten Zeitraums auf Grundlage von Zeitinformationen des ersten charakteristischen Signals, wobei ein Empfangsmoment des ersten charakteristischen Signals innerhalb des ersten Zeitraums liegt; und

Erlangen eines elektrischen Teilsignals, das in dem ersten Zeitraum liegt und das aus einem elektrischen Signal von der ersten Erfassungseinheitsgruppe besteht, um das erste elektrische Signal zu erlangen, wobei die erste Erfassungseinheitsgruppe eine der mindestens einen Erfassungseinheitsgruppe ist; und

Bestimmen der mindestens einen Echo-Information in dem Erfassungsbereich auf Grundlage des ersten elektrischen Signals,

oder Bestimmen eines ersten Zeitraums auf Grundlage von Zeitinformationen des ersten charakteristischen Signals, wobei ein Empfangsmoment des ersten charakteristischen Signals innerhalb des ersten Zeitraums liegt; und

Erlangen von Signalen, die in dem ersten Zeitraum liegen und die in einer Vielzahl von elektrischen Signalen von der ersten Erfassungseinheitsgruppe liegen, um eine Vielzahl von elektrischen Teilsignalen zu erlangen, wobei die erste Erfassungseinheitsgruppe eine der mindestens einen Erfassungseinheitsgruppe ist, und das erste elektrische Signal, das durch Konvergieren der Vielzahl von elektrischen Teilsignalen erlangt wird, verwendet wird, um die mindestens eine Echo-Information in dem Erfassungsbereich zu bestimmen.

**13.** Endgerät, wobei das Endgerät das Laserradar (10) nach einem der Ansprüche 9 bis 11 umfasst.

**14.** Endgerät nach Anspruch 13, das ein Fahrzeug ist.

**Revendications**

**1.** Procédé de traitement de signal, comprenant :

la réflexion (S201) d'une première lumière laser vers une zone de détection à un premier angle ($\theta_x$') à l'aide d'un module de réflexion de type balayage (102) ;
la détermination (S202) d'un premier signal électrique convergé sur la base d'au moins deux signaux électriques provenant d'au moins deux unités de détection (403), dans lequel le premier signal électrique convergé comprend au moins un signal caractéristique ;
la détermination (S203), sur la base d'informations temporelles de l'au moins un signal caractéristique, d'au moins une distance cible correspondant à la zone de détection, dans lequel l'au moins un signal caractéristique correspond à l'au moins une distance cible ;
la détermination (S204) d'au moins un groupe d'unités de détection sur la base de l'au moins une distance cible et du premier angle ($\theta_x$'), dans lequel une unité de détection (403) comprise dans chacun de l'au moins un groupe d'unités de détection appartient aux au moins deux unités de détection (403) ; et
la détermination (S205) d'au moins un élément d'information d'écho dans la zone de détection sur la base d'un premier signal électrique obtenu sur la base d'au moins un signal électrique provenant d'un premier groupe d'unités de détection dans l'au moins un groupe d'unités de détection,
dans lequel l'au moins un signal caractéristique comprend un premier signal caractéristique, le premier signal caractéristique est utilisé pour déterminer une première distance cible, et la première distance cible est utilisée pour déterminer le premier groupe d'unités de détection ; et la détermination de l'information d'écho dans la zone de détection, sur la base du premier signal électrique obtenu sur la base de l'au moins un signal électrique provenant du premier groupe d'unités de détection dans l'au moins un groupe d'unités de détection, comprend :

soit la détermination d'une première période sur la base d'informations temporelles du premier signal caractéristique,
dans lequel un moment de réception du premier signal caractéristique se situe dans la première période ; et l'obtention d'un sous-signal électrique qui se situe dans la première période et qui est d'un signal électrique provenant du premier groupe d'unités de détection, pour obtenir le premier signal électrique, dans lequel le premier groupe d'unités de détection est un de l'au moins un groupe d'unités de détection ; et la détermination de l'au moins un élément d'information d'écho dans la zone de détection sur la base du premier signal électrique,
soit la détermination d'une première période sur la base d'informations temporelles du premier signal caractéristique, dans lequel un moment de réception du premier signal caractéristique se situe dans la première période ; et
l'obtention de signaux qui se trouvent dans la première période et qui se trouvent dans une pluralité de signaux électriques provenant du premier groupe d'unités de détection pour obtenir une pluralité de sous-signaux électriques, dans lequel le premier groupe d'unités de détection est l'un de l'au moins un groupe d'unités de détection, et le premier signal électrique obtenu en faisant converger la pluralité de sous-signaux électriques est utilisé pour déterminer l'au moins un élément d'information d'écho dans la zone de détection.

**2.** Procédé selon la revendication 1, dans lequel chaque unité de détection (403) est un microcomposant de conversion photoélectrique (301, 302, 303, 304) ou un ensemble de microcomposants de conversion photoélectrique (301, 302, 303, 304).

**3.** Procédé selon la revendication 1 ou 2, dans lequel le signal caractéristique comprend un signal de crête, un signal de front ou un signal de centroïde de forme d'onde du premier signal électrique convergé ; et les informations temporelles sont utilisées pour indiquer un moment de réception du signal caractéristique.

**4.** Procédé selon l'une quelconque des revendications 1 à 3, dans lequel la détermination de l'information d'écho dans la zone de détection, sur la base du premier signal électrique obtenu sur la base de l'au moins un signal électrique provenant du premier groupe d'unités de détection dans l'au moins un groupe d'unités de détection, comprend :

la détermination de la première période sur la base des informations temporelles du premier signal caractéristique, dans lequel le moment de réception du premier signal caractéristique se situe dans la première période ; l'obtention du sous-signal électrique qui se situe dans la première période et qui est du signal électrique provenant du premier groupe d'unités de détection, pour obtenir le premier signal électrique, dans lequel le premier groupe d'unités de détection est l'un de l'au moins un groupe d'unités de détection ; et la détermination de l'au moins un élément de l'information d'écho dans la zone de détection sur la base du premier signal électrique.

**5.** Procédé selon l'une quelconque des revendications 1 à 3, dans lequel la détermination de l'information d'écho dans la zone de détection, sur la base du premier signal électrique obtenu sur la base de l'au moins un signal électrique provenant du premier groupe d'unités de détection dans l'au moins un groupe d'unités de détection, comprend :

la détermination de la première période sur la base des informations temporelles du premier signal caractéristique, dans lequel le moment de réception du premier signal caractéristique se situe dans la première période ; et l'obtention des signaux qui se trouvent dans la première période et qui se trouvent dans la pluralité de signaux électriques provenant du premier groupe d'unités de détection pour obtenir la pluralité des sous-signaux électriques, dans lequel le premier groupe d'unités de détection est l'un de l'au moins un groupe d'unités de détection, et le premier signal électrique obtenu en faisant converger la pluralité des sous-signaux électriques est utilisé pour déterminer l'au moins un élément de l'information d'écho dans la zone de détection.

**6.** Procédé selon l'une quelconque des revendications 1 à 5, dans lequel la détermination d'au moins un groupe d'unités de détection sur la base de l'au moins une distance cible et du premier angle ($\theta_x$') comprend : la détermination, sur la base d'un premier ensemble de correspondances, d'un groupe d'unités de détection correspondant à l'au moins une distance cible et au premier angle ($\theta_x$').

**7.** Procédé selon l'une quelconque des revendications 1 à 6, dans lequel l'au moins un élément d'information d'écho dans la zone de détection est utilisé pour représenter au moins une de l'intensité de réflexion ou d'une distance de la zone de détection.

**8.** Procédé selon l'une quelconque des revendications 1 à 7, dans lequel le procédé est appliqué à un radar laser (10) ; le radar laser (10) comprend un module de réflexion de type balayage (102), une lentille de réception (103), un détecteur matriciel (104, 1202) comprenant les au moins deux unités de détection (403), et un dispositif de diffusion, et le dispositif de diffusion est disposé entre la lentille de réception (103) et le détecteur matriciel (104, 1202), et est configuré pour diffuser un signal optique traversant la lentille de réception (103).

**9.** Appareil de traitement de signal (130), dans lequel l'appareil (130) comprend :

une unité de commande de balayage (1301), configurée pour réfléchir une première lumière laser vers une zone de détection selon un premier angle ($\theta_x$') à l'aide d'un module de réflexion de type balayage (102) ; une unité de convergence (1302), configurée pour déterminer un premier signal électrique convergé sur la base d'au moins deux signaux électriques provenant d'au moins deux unités de détection (403), dans lequel le premier signal électrique convergé comprend au moins un signal caractéristique ; une unité de détermination de distance (1303), configurée pour déterminer, sur la base d'informations temporelles de l'au moins un signal caractéristique, au moins une distance cible correspondant à la zone de détection, dans lequel l'au moins un signal caractéristique correspond à l'au moins une distance cible ; une unité de détermination de groupe d'unités (1304), configurée pour déterminer au moins un groupe d'unités de détection sur la base de l'au moins une distance cible et du premier angle ($\theta_x$'), dans lequel une unité de détection (403) comprise dans chacun de l'au moins un groupe d'unités de détection appartient aux au moins deux unités de détection (403) ; et une unité de détermination d'écho (1305), configurée pour déterminer au moins un élément d'information d'écho dans la zone de détection sur la base d'un premier signal électrique obtenu sur la base d'au moins un signal électrique provenant d'un premier groupe d'unités de détection dans l'au moins un groupe d'unités de détection, dans lequel l'au moins un signal caractéristique comprend un premier signal caractéristique, le premier signal caractéristique est utilisé pour déterminer une première distance cible, et la première distance cible est utilisée pour déterminer le premier groupe d'unités de détection ; et dans l'aspect de la détermination d'information d'écho dans la zone de détection, sur la base du premier signal électrique obtenu sur la base de l'au moins un signal électrique provenant du premier groupe d'unités de détection dans l'au moins un groupe d'unités de détection, l'unité de détermination d'écho (1305) est configurée pour :

soit déterminer une première période sur la base d'informations temporelles du premier signal caractéristique, dans lequel un moment de réception du premier signal caractéristique se situe dans la première période ; et

obtenir un sous-signal électrique qui se situe dans la première période et qui est d'un signal électrique provenant du premier groupe d'unités de détection, pour obtenir le premier signal électrique, dans lequel le premier groupe d'unités de détection est un de l'au moins un groupe d'unités de détection ; et déterminer l'au moins un élément d'information d'écho dans la zone de détection sur la base du premier signal électrique,

soit déterminer une première période sur la base d'informations temporelles du premier signal caractéristique, dans lequel un moment de réception du premier signal caractéristique se situe dans la première période ; et

obtenir des signaux qui se trouvent dans la première période et qui se trouvent dans une pluralité de signaux électriques provenant du premier groupe d'unités de détection pour obtenir une pluralité de sous-signaux électriques, dans lequel le premier groupe d'unités de détection est l'un de l'au moins un groupe d'unités de détection, et le premier signal électrique obtenu en faisant converger la pluralité de sous-signaux électriques est utilisé pour déterminer l'au moins un élément d'information d'écho dans la zone de détection.

10. Appareil (130) selon la revendication 9, dans lequel chaque unité de détection (403) est un microcomposant de conversion photoélectrique (301, 302, 303, 304) ou un ensemble de microcomposants de conversion photoélectrique (301, 302, 303, 304).

11. Appareil (130) selon la revendication 9 ou 10, dans lequel le signal caractéristique comprend un signal de crête, un signal de front ou un signal de centroïde de forme d'onde du premier signal électrique convergé ; et les informations temporelles sont utilisées pour indiquer un moment de réception du signal caractéristique.

12. Radar laser (10), dans lequel le radar laser (10) comprend un émetteur laser (101, 1201), un module de réflexion de type balayage (102), un détecteur matriciel (104, 1202), une mémoire (107, 1401) et un processeur (106, 1402), l'émetteur laser (101, 1201) est configuré pour transmettre une première lumière laser, le détecteur matriciel (104, 1202) comprend au moins deux unités de détection (403), la mémoire (107, 1401) stocke un programme de calcul, et le processeur (106, 1402) appelle le programme informatique stocké dans la mémoire (107, 1401) pour réaliser les opérations suivantes :

la réflexion de la première lumière laser vers une zone de détection à un premier angle ($\theta_x$') à l'aide d'un module de réflexion de type balayage (102) ;

la détermination d'un premier signal électrique convergé sur la base d'au moins deux signaux électriques provenant d'au moins deux unités de détection (403), dans lequel le premier signal électrique convergé comprend au moins un signal caractéristique ;

la détermination, sur la base d'informations temporelles de l'au moins un signal caractéristique, d'au moins une distance cible correspondant à la zone de détection, dans lequel l'au moins un signal caractéristique correspond à l'au moins une distance cible ;

la détermination d'au moins un groupe d'unités de détection sur la base de l'au moins une distance cible et du premier angle ($\theta_x$'), dans lequel une unité de détection (403) comprise dans chacun de l'au moins un groupe d'unités de détection appartient aux au moins deux unités de détection (403) ; et

la détermination d'au moins un élément d'information d'écho dans la zone de détection sur la base d'un premier signal électrique obtenu sur la base d'au moins un signal électrique provenant d'un premier groupe d'unités de détection dans l'au moins un groupe d'unités de détection,

dans lequel l'au moins un signal caractéristique comprend un premier signal caractéristique, le premier signal caractéristique est utilisé pour déterminer une première distance cible, et la première distance cible est utilisée pour déterminer le premier groupe d'unités de détection ; et la détermination de l'information d'écho dans la zone de détection,

sur la base du premier signal électrique obtenu sur la base de l'au moins un signal électrique provenant du premier groupe d'unités de détection dans l'au moins un groupe d'unités de détection, comprend :

soit la détermination d'une première période sur la base d'informations temporelles du premier signal caractéristique, dans lequel un moment de réception du premier signal caractéristique se situe dans la première période ; et

l'obtention d'un sous-signal électrique qui se situe dans la première période et qui est d'un signal électrique provenant du premier groupe d'unités de détection, pour obtenir le premier signal électrique, dans lequel le premier groupe d'unités de détection est un de l'au moins un groupe d'unités de détection ; et

la détermination de l'au moins un élément d'information d'écho dans la zone de détection sur la base du premier signal électrique,

soit la détermination d'une première période sur la base d'informations temporelles du premier signal caractéristique,

dans lequel un moment de réception du premier signal caractéristique se situe dans la première période ; et l'obtention de signaux qui se trouvent dans la première période et qui se trouvent dans une pluralité de signaux électriques provenant du premier groupe d'unités de détection pour obtenir une pluralité de sous-signaux électriques, dans lequel le premier groupe d'unités de détection est l'un de l'au moins un groupe d'unités de détection, et le premier signal électrique obtenu en faisant converger la pluralité de sous-signaux électriques est utilisé pour déterminer l'au moins un élément d'information d'écho dans la zone de détection.

**13.** Terminal, dans lequel le terminal comprend le radar laser (10) selon l'une quelconque des revendications 9 à 11.

**14.** Terminal selon la revendication 13 qui est un véhicule.

FIG. 1

EP 4 071 502 B1

Reflect first laser light to a detection area at a first angle by using a scanning-type reflection module — S201

Determine a first converged electrical signal based on at least two electrical signals from at least two detection units — S202

Determine, based on time information of the at least one characteristic signal, at least one target distance corresponding to the detection area — S203

Determine at least one detection unit group based on the at least one target distance and the first angle — S204

Determine at least one piece of echo information in the detection area based on a first electrical signal obtained based on at least one electrical signal from a first detection unit group in the at least one detection unit group — S205

FIG. 2

FIG. 3

FIG. 4(a)

FIG. 4(b)

FIG. 4(c)

FIG. 4(d)

FIG. 5

FIG. 6

FIG. 7

EP 4 071 502 B1

FIG. 8

EP 4 071 502 B1

FIG. 9

FIG. 10

EP 4 071 502 B1

FIG. 11

Correspondence set

| Distance | Pitch angle | Azimuth | Detection unit group |
|----------|-------------|---------|----------------------|
| d4 | x2 | y2 | None |
| d5 | x2 | y2 | CH2 and CH3 |
| d6 | x2 | y2 | CH3 and CH4 |

EP 4 071 502 B1

FIG. 12

130

Signal processing apparatus

Scanning control unit — 1301

Convergence unit — 1302

Distance determining unit — 1303

Unit group determining unit — 1304

Echo determining unit — 1305

FIG. 13

140

Signal processing device

1401

1402

Processor

1403

Computer program

Memory

FIG. 14

**EP 4 071 502 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108152830 A
- CN 110609293 A
- US 20010025211 A1